(19) Europäisches Patentamt
European Patent Office
Office européen des brevets

(11) Veröffentlichungsnummer: **0 029 106**
**B1**

(12) # EUROPÄISCHE PATENTSCHRIFT

(45) Veröffentlichungstag der Patentschrift: **30.01.85**

(21) Anmeldenummer: **80105948.6**

(22) Anmeldetag: **01.10.80**

(51) Int. Cl.⁴: **C 09 B 62/465,** D 06 P 3/66, D 06 P 3/10, C 07 C 103/46

(54) **Reaktivfarbstoffe, die eine Halogenalkanoylamido- oder Halogenacryloylamido-Gruppe enthalten, deren Herstellung und Verwendung, sowie die Halogenalkanoylamido- bzw. Halogenacryloylamido-Zwischenverbindung.**

(30) Priorität: **05.10.79 CH 9017/79**

(43) Veröffentlichungstag der Anmeldung: **27.05.81 Patentblatt 81/21**

(45) Bekanntmachung des Hinweises auf die Patenterteilung: **30.01.85 Patentblatt 85/05**

(84) Benannte Vertragsstaaten: **BE CH DE FR GB IT LI**

(56) Entgegenhaltungen:
**CH-A- 373 117**
**DE-A-1 919 598**
**FR-A-1 384 361**

(73) Patentinhaber: **CIBA-GEIGY AG**
**Postfach**
**CH-4002 Basel (CH)**

(72) Erfinder: **Adam, Jean-Marie, Dr.**
**3, Rue de Montreux**
**F-68300 Saint-Louis (FR)**
Erfinder: **Bühler, Arthur, Dr.**
**Im Lichs 6**
**CH-4310 Rheinfelden (CH)**

(74) Vertreter: **Berg, Wilhelm, Dr. et al**
**Patentanwälte Dr. Berg Dipl.-Ing. Stapf Dipl.-Ing. Schwabe Dr. Dr. Sandmair Postfach 86 02 45**
**Stuntzstrasse 16**
**D-8000 München 86 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 029 106 B1

**Beschreibung**

Die Erfindung betrifft faserreaktive Farbstoffe der Formel

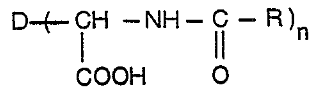

(1)

worin

D ein organischer Farbstoffrest ist, der mindestens eine wasserlöslichmachende Gruppe enthält,
R einen Halogenalkylrest mit 1 bis 2 C-Atomen oder einen Halogenacrylrest und
n eine ganze Zahl von 1 bis 4 bedeutet.

Die Reste der Formel

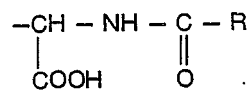

(2)

sind jeweils an ein aromatisches Kohlenstoffatom von D gebunden, insbesondere an einen Benzolkern.

Der Rest eines organischen Farbstoffes D in Formel (1) kann weitere Substituenten enthalten. Als Beispiele seien genannt: Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Aryloxygruppen, wie Phenoxy oder mit Chlor, Brom, Nitro, Methyl oder Methoxy substituiertes Phenoxy, Acylaminogruppen mit 1 bis 6 Kohlenstoffatomen, wie Acetylamino, Propionylamino und Benzoylamino, Halogen, wie Fluor, Chlor oder Brom, Nitro, Cyan, Trifluormethyl, gegebenenfalls N-mono oder -N,N-di-alkyl und/oder -aryl substituiertes Sulfamoyl oder Carbamoyl, Ureido, Hydroxy, Carboxy und Sulfomethyl.

Vorzugsweise soll D einen gegebenenfalls durch $D_1$—$C_4$-Alkyl oder $C_1$—$C_4$-Alkoxy substituierten Phenylrest aufweisen, da sich die neue Reaktivgruppe in einen solchen besonders gut einführen lässt.

Als wasserlöslichmachende Gruppen enthält der Rest D vorzugsweise Sulfogruppen.

Insbesondere handelt es sich bei D um einen Farbstoff der Anthrachinon-, Azo-, Dioxazin- oder Phthalocyaninreihe, der 1 bis 3, vorzugsweise 1 oder 2 Sulfogruppen enthält.

Von besonderen Interesse sind die Anthrachinon- und Azofarbstoffe, die eine oder 2 Gruppen der Formel (1) enthalten und worin der Rest R eine der folgenden Bedeutungen hat: $—CH_2Cl$, $—CH_2Br$, $—CCl{=}CH_2$, $—CHCl—CH_2Cl$ oder vor allem $—CHBr—CH_2Br$ und $CBr{=}CH_2$.

Unter den Anthrachinonfarbstoffen sind speziell diejenigen der Formel

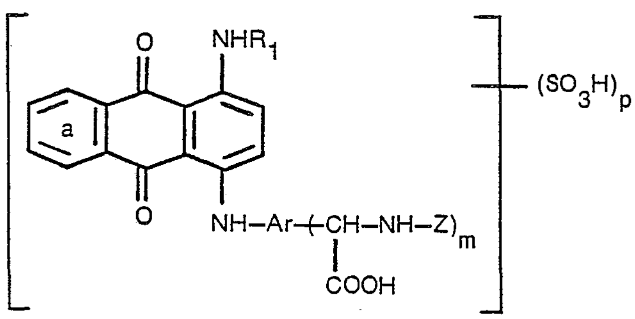

(3)

von Interesse, worin $R_1$ Wasserstoff, $C_{1-5}$-Alkyl, Cycloalkyl mit bis zu 9 C-Atomen, Aralkyl oder Aryl, Ar einen Arylenrest, Z einen $\alpha,\beta$-Dichlor- oder -Dibrompropionyl-, einen $\alpha$-Chlor- oder $\alpha$-Bromacryloyl- oder einen Chloracetylrest, m 1 oder 2 und p 1 oder 2 bedeutet und worin der Ring a gegebenenfalls mit Hydroxyl oder Halogen substituiert ist.

$R_1$ bedeutet hierin vorzugsweise Wasserstoff oder einen sekundären Alkylrest oder einen Cycloalkylrest mit bis zu 9 C-Atomen, wie z.B. 2-Methylbutyl-3, Pentyl-2, Pentyl-3, Cyclopentyl, Cyclohexyl, mit 1 bis 3 Methylgruppen substituiertes Cyclohexyl und insbesondere Isopropyl und Butyl-2.

Ar ist vorzugsweise ein Rest der Benzolreihe, der gegebenenfalls substituiert ist, z.B. mit $C_1$—$C_4$-Alkyl, $C_1$—$C_4$-Alkoxy, $C_1$—$C_4$-Alkylsulfonyl, Carboxy, Sulfo, Sulfamoyl, N-Alkyl- oder N-Arylsulfamoyl- oder Halogen. Vor allem ist Ar jedoch ein mit bis zu 3 Methylgruppen substituierter Phenylenrest.

Der Ring a kann eine Sulfogruppe oder auch andere Substituenten, wie z.B. Halogen, insbesondere Chlor, oder Hydroxyl tragen.

Eine weitere Gruppe von speziell interessanten Anthrachinonfarbstoffen sind diejenigen der Formel

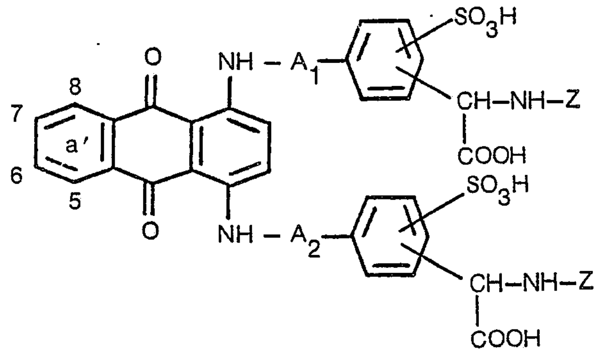

(4)

worin $A_1$ und $A_2$ je einen gegebenenfalls verzeigten Alkylenrest mit bis 5 Kohlenstoffatomen und Z einen $\alpha,\beta$-Dichlor- oder -Dibrompropionyl-, einen $\alpha$-Chlor- oder $\alpha$-Bromacryloyl- oder einen Chloracetylrest bedeutet und worin der Ring a' gegebenenfalls mit Hydroxyl oder Halogen substituiert ist.

Wenn der Ring a' mit Hydroxylgruppen substituiert ist, so stehen diese vorzugsweise in den Stellungen 5 und 8. Als Halogenatome kommen Brom und insbesondere Chlor in Betracht. Diese stehen vor allem in den Positionen 6 und/oder 7 des Anthrachinongerüstes.

Die Reste $A_1$ und $A_2$ können gleich oder verschieden sein. Bevorzugt sind $A_1$ und $A_2$ je 1-Methylpropylenketten.

Von Interesse sind nebst den genannten Anthrachinonfarbstoffen auch Azofarbstoffe, insbesondere solche der Formel

$$[D—N{=}N—K]\!-\!(\underset{\displaystyle COOH}{\underset{|}{CH}}—NH—Z)_m \qquad (5)$$

worin D den Rest einer Diazokomponente der Benzol- oder Naphthalinreihe und K den Rest einer Kupplungskomponente bedeutet, vorzugsweise den Rest einer Naphtholsulfonsäure, eines Acetoacetanilids, eines Pyrazol-5-ons oder eines Naphtho-(1,2-d)-imidazols.

Vorzugsweise ist D ein Rest der Benzolreihe, der mit $C_1$—$C_4$-Alkyl, vor allem Methyl substituiert ist.

Die Reste K leiten sich insbesondere von folgenden Gruppen von Kupplungskomponenten ab:

—Naphtholsulfonsäuren, wie z.B. 2-Naphthol-3-, -4-, -5-, -6-, -7- oder -8-sulfosäure oder 1-Naphthol-3-, -4- oder -5-sulfosäure.

—Acetessigsäurearylide, insbesondere -anilide, die im Anilidkern gegebenenfalls mit Chlor, Brom, Sulfo, $C_1$—$C_4$-Alkyl sowie $C_1$—$C_4$-Alkoxy substituiert sind, wie z.B. Acetoacetanilid, Acetoacetanilid-3- oder -4-sulfosäure, Acetoacet-o-chloranilid, Acetoacet-o-toluidid, Acetoacet-o-anisidid oder Acetoacet-m-xylidid.

—5-Pyrazolone oder 5-Aminopyrazole, die in 1-Stellung einen gegebenenfalls mit Chlor, Nitro, Sulfo, $C_1$—$C_4$-Alkyl oder $C_1$—$C_4$-Alkyl substituierten Phenylrest tragen, wie z.B. 1-(2', 3'- oder 4'-Sulfophenyl)-3-methyl-pyrazol-5-on, 1-(2'-Chlor-5'-sulphenyl)-3-methyl-pyrazol-5-on, 1-(2',5'-Dichlor-4'-sulfophenyl)-3-methyl-pyrazol-5-on, 1-(2'- oder 4'-Methylphenyl)-3-methyl-pyrazol-5-on, oder 1-(2'-, 3'- oder 4'-Methylphenyl)-3-methyl-pyrazol-5-on.

—Naphtho-(1,2-d)-imidazole, wie sie in der DT—OS 2,247,838 beschrieben worden sind, z.B. 1-(2'-Chlorphenylamino)-9-hydroxy-2-methyl-1H-naphtho-(1,2-d)-imidazol-7-sulfonsäure, 1-(2',5'-Disulfophenylamino)-9-hydroxy-2-methyl-1H-naphtho-(1,2-d)-imidazol-7-sulfonsäure oder 1-(2'-Chlor-5'-sulfophenylamino)-9-hydroxy-2-methyl-1H-naphtho-(1,2-d)-imidazol-7-sulfonsäure.

Die neuen Farbstoffe werden hergestellt, indem man die entsprechenden Farbstoffverbindungen

$$D(—H)_n \qquad (6)$$

worin D und n dasselbe wie in Formel (1) bedeutet und H ein ersetzbares, an ein aromatisches Kohlenstoffatom von D gebundenes Wasserstoffstom ist, mit einer Halogenalkanoyl- oder Halogenacryloylamidoglykolsäure umsetzt. Diese Reaktion erfolgt unter denselben Bedingungen wie die Umsetzung mit N-Methylolverbindungen von aliphatischen Halogencarbonsäureamiden oder funktionellen Derivaten derselben (A. Einhorn, Liebigs Annalen der Chemie, *343*, 207 (1905) und *361*, 113 (1908)).

Die Chloracetamidoglykolsäure ist aus der DE—OS 2,640,615 bekannt. Die Dihalogenpropionamidoglykolsäuren und die $\alpha$-Halogenacrylolylamidoglykolsäuren sind neu und bilden ebenfalls einen Gegenstand der Erfindung. Die Dihalogenverbindungen werden erhalten durch Halogenierung von Acyloylamidoglykolsäure und die $\alpha$-Halogenacryloylverbindungen sind erhältlich durch Abspalten von Halogenwasserstoff aus den Dihalogenverbindungen durch Einwirkung von Alkali, z.B. Natronlauge.

Von besonderem Interesse sind die Dibrompropionamidoglykolsäure und die daraus durch Abspalten von HBr erhältliche $\alpha$-Bromacryloylamidoglykolsäure.

Gegebenenfalls können im Anschluss an diese Kondensation noch weitere Reaktionen durchgeführt werden, z.B. kann der erhaltene Farbstoff sulfiert werden und/oder, wenn mit Dibrompropionamidoglykolsäure umgesetzt wurde, kann anschliessend durch Behandeln mit Alkali Bromwasserstoff abgespalten werden.

So werden z.B. die Verbindungen der Formel (4) zweckmässig hergestellt, indem man eine Verbindung der Formel

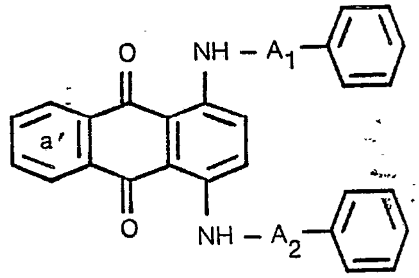

(7)

worin $A_1$ und $A_2$ je einen gegebenenfalls verzweigten Alkylenrest mit bis 5 Kohlenstoffatomen bedeutet und der Ring a' gegebenenfalls mit Hydroxyl oder Halogen substituiert ist, mit 2 Aequivalenten $\alpha,\beta$-Dichlor- oder $\alpha,\beta$-Dibromopropionamidoglykolsäure, $\alpha$-Chlor oder $\alpha$-Bromacryloylamidoglykolsäure oder Chloroacetamidoglykolsäure umsetzt und anschliessend sulfiert.

Die Kondensation der Farbstoffe mit den Acylamidoglykolsäuren erfolgt in Gegenwart saurer Kondensationsmittel oder wie solche reagierender wasserabspaltender Mittel. Als solche sind vor allem konzentrierte Salzsäure, Chlorzink, Phosphorpentoxyd, Essigsäureanhydrid, Phosphorsäure und Oleum verwendbar. Das bevorzugte Kondensationsmittel ist jedoch konzentrierte bis wasserfreie Schwefelsäure, da sie meist gleichzeitig als Lösungsmittel für die Reaktionspartner dienen kann. Die Reaktionstemperatur kann innerhalb weiter Grenzen schwanken und hängt vor allem von dem verwendeten Kondensationsmittel ab. In konzentrierter Schwefelsäure verläuft die Reaktion meist schon bei Zimmertemperatur rasch und vollständig. In einigen Fällen ist das Arbeiten bei erhöhter Temperatur, beispielsweise bei 40 bis 80°C, nötig. Die fertigen Reaktionsprodukte werden durch Eingiessen der schwefelsauren Lösungen oder Suspensionen in Eiswasser abgeschieden und auf übliche Art isoliert.

Mit Rücksicht auf die gute Augänglichkeit wie auch im Hinblick auf die guten färberischen Eigenschaften der daraus erhältichen Endprodukte, verwendet man als Halogenalkanoylamidoglykolsäure vor allem die $\alpha$,-Dibrompropionamidoglykolsäure.

Die neuen Farbstoffe eignen sich zum Färben und Bedrucken der verschiedensten Materialien, z.B. solcher tierischer Herkunft, wie Leder, Seide und vor allem Wolle, sowie verschiedener Kunstfasern, z.B. aus Superpolyamiden und Superpolyurethanen. Sie sind besonders zum Färben aus neutralem bis saurem Medium geeignet.

Die neuen Farbstoffe eignen sich ebenfalls zum Färben und Bedrucken von cellulosehaltigen Materialien, wie Baumwolle und regenerierten Cellulosefasern, wobei sie zwecks Fixierung einer Wärmebehandlung in Gegenwart von Alkali, z.B. in Gegenwart von Natrium(hydrogen)carbonat, Natriumhydroxyd oder Trinatriumphosphat unterworfen werden.

Sie eigen sich insbesondere zum Färben von Wolle aus schwach saurem, z.B. essigsaurem Bade in Gegenwart von Netz- und Egalisermitteln, insbesondere in Gegenwart von Polyglykolätherderivaten, die durchschnittlich 5 bis 10 $—CH_2—CH_2—O—$Gruppen enthalten, und sich von primären Monoaminen ableiten, die einen aliphatischen Kohlenwasserstoffrest mit 15 bis 20 Kohlenstoffatomen enthalten.

Die mit den neuen Farbstoffen erhaltenen Färbungen zeichnen sich durch gute Lichtechtheit und Reibechtheit und ausgezeichnete Nassechtheit, wie z.B. Wasch-, Wasser-, Schweiss-, Feuchthitze- und Walkechtheit, aus. Sie haben eine gute Wasserlöslichkeit und einen hohen Fixiergrad und geben kräftige, egale Färbungen.

Aehnliche Farbstoffe wie die erfindungsgemässen Farbstoffe werden in der deutschen Offenlegungsschrift 19 19 598 beschrieben, die sich von den erfindungsgemässen Farbstoffen in charakteristischer Weise dadurch unterscheiden, dass die Methyl-Gruppe des Acylaminomethylrestes unsubstituiert ist.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

*Beispiel 1*: 78 Teile Acryloylamidoglykolsäure Monohydrat werden mit 77 Teilen Brom in 500 Tetrachlorkohlenstoff bei Raumtemperatur bromiert. Nach 20 Stunden ist die Reaktion beendet und die

dickflüssige Suspension wird abgesaugt und mit Tetrachlorkohlenstoff gewaschen, bis die Waschflüssigkeit farblos bleibt. Das Nutschgut wird bei 60°C im Vakuum getrocknet, man erhält 143 Teile Dibrompropionamidoglykolsäure der Formel:

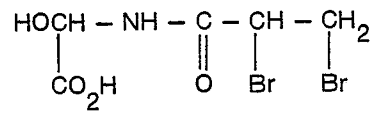

Eine Mischung aus 16 Teilen der so erhaltenen Dibrompropionamidoglykolsäure und 24 Teil des Natriumsalzes der 1-Amino-4-mesidinoanthrachinon-2-sulfonsäure der Formel

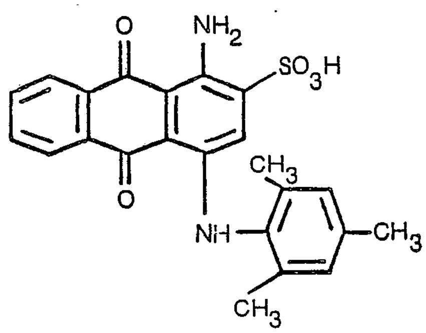

wird bei 10 bis 15° in 125 Teilen 96%iger Schwefelsäure gelöst. Man rührt das Reaktionsgemisch noch 15 Stunden bei dieser Temperatur, giesst es dann in ein Eis-Wasser-Gemisch und saugt den ausgeschiedenen Farbstoff ab.

Der so erhaltene Rückstand wird in Wasser angeschlämmt und nach üblicher Art als Natriumsalz isoliert. Man erhält einen wasserlöslichen blauen Farbstoff der Formel:

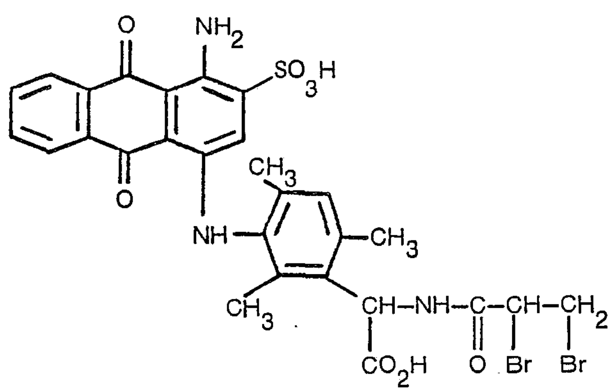

der Wolle vorzugsweise in Gegenwart von Egalisiermitteln (z.B. einem Kondensationsprodukt aus höheren aliphatischen Aminen mit Aethylenoxyd) aus essigsaurem Bade in nassechten, brillanten, blauen Tönen von guter Lichtechtheit färbt.

*Beispiel 2*: Verwendet man anstelle der 16 Teile Dibrompropionamidoglykolsäure 32 Teile der gleichen Verbindung und verfährt gemäss den Angaben des Beispiels 1, so erhält man einen bis-Reaktivfarbstoff der Formel:

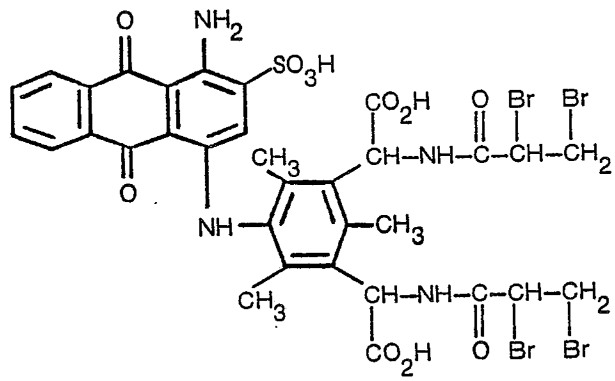

mit sehr guten färberischen Eigenschaften und ausgezeichneten Nassechtheiten.

*Beispiel 3:* 78 Teil Acryloylamidoglykolsäure Monohydrat werden in 500 Teilen Tetrachlorkohlenstoff angeschlämmt und 34 Teile Chlor werden innerhalb von 4 Stunden bei Raumtemperatur eingeleitet. Die Suspension wird abgesaugt und mit Tetrachlorkohlenstoff gewaschen. Das Nutschgut wird bei 60° im Vakuum getrocknet, man erhält 102 Teile Dichlorpropionamidoglykolsäure der Formel:

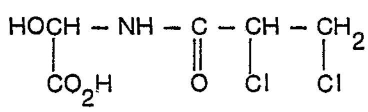

Eine Mischung aus 12 Teilen der so erhaltenen Dichlorpropionamidoglykolsäure und 24 Teilen des Natriumsalzes der 1-Amino-4-mesidinoanthrachinon-2-sulfonsäure werden gemäss Beispiel 1 kondensiert. Man erhält den Reaktivfarbstoff der Formel:

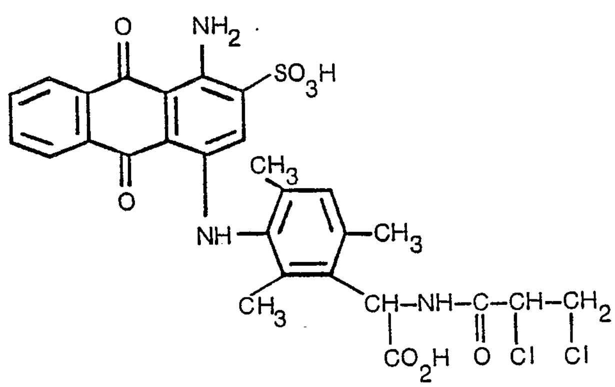

der Wolle in reinen, nassechten blauen Tönen färbt.

*Beispiel 4*: 76,5 Teile des nach Beispiel 1 erhältlichen Farbstoffes werden in 500 Teilen Wasser gelöst, die Lösung unter Zugabe von Eis auf 10° abgekühlt und mit 12 Vol.-Teilen 10n-Natriumhydroxydlösung versetzt. Nach 30-minütigem Nachrühren bei 10—15° wird die Lösung durch Zugabe von ca. 10 Vol.-Teilen 1n-Salzsäure neutralisiert und der Farbstoff durch Zugabe von Natriumchlorid abgeschieden, filtiert und im Vakuum bei 60—70° getrocknet. Man erhält ein gut wasserlösliches Bromacrylderivat der Formel:

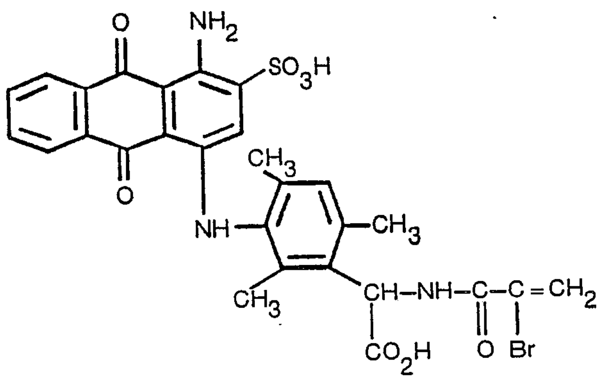

das Wolle in reinen blauen Tönen von guten Echteitseigenschaften färbt.

*Beispiel 5*: Ersetzt man im obigen Beispiel die 76,5 Teile des nach Beispiel 1 erhältlichen Farbstoffes durch 67,5 Teile des gemäss Beispiel 3 entsprechenden Dichlorderivates, so erhält man bei im übrigen gleicher Arbeitsweise den Farbstoff der Formel:

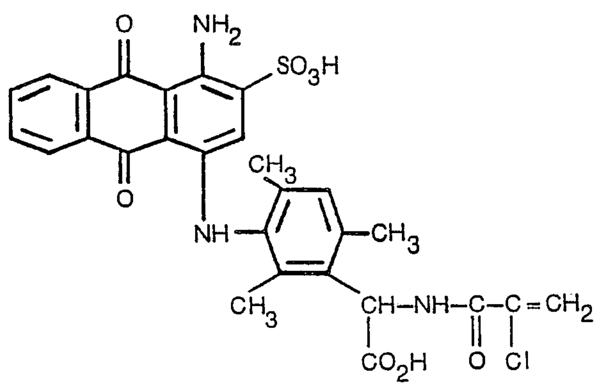

mit sehr ähnlichen Eingenschaften.

*Beispiel 6*: Ein Gemisch aus 9 Teilen Chloracetamidoglykolsäure und 24 Teilen des Natriumsalzes der 1-Amino-4-mesidinoanthrachinon-2-sulfonsäure wird bei 10—15° in 125 Teilen 96%iger Schwefelsäure gelöst. Man rührt das Reaktionsgemisch noch 15 Stunden bei dieser Temperatur, giesst es dann in in ein Eis-Wasser-Gemisch und saugt den ausgeschiedenen Farbstoff ab.

Der so erhaltene Rückstand wird in Wasser angeschlämmt und nach üblicher Art als Natriumsalz isoliert. Man erhält einen Reaktivfarbstoff der Formel:

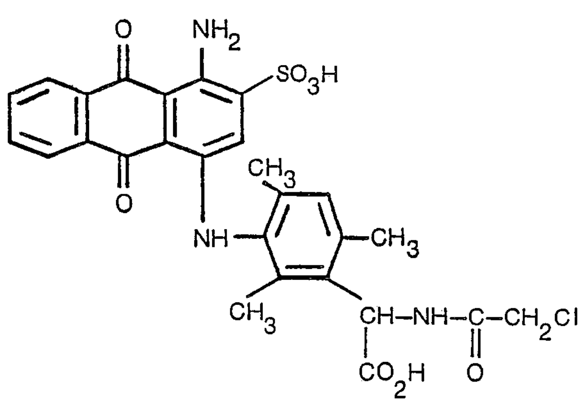

der Wolle in reinen nassechten blauen Tönen von guter Lichtechtheit färbt.

Verwendet man anstelle der 24 Teile des Natriumsalzes der 1-Amino-4-mesidinoanthrachinon-2-sulfonsäure äquivalente Teile der in der folgenden Tabelle in Kolonne II aufgeführten Farbstoffe und setzt diese mit den in Kolonne III angegebenen Teilen der Dibrompropionamidoglykolsäure um, so erhält man bei gleicher Arbeitsweise wie in Beispiel 1 Reaktivfarbstoffe gemäss der Kolonne IV, deren Farbnuancen auf Wolle in Kolonne V der Tabelle angegeben sind.

| I<br>Bsp. | II<br>Farbstoff | III<br>Teile Dibrom-propionamid-glykolsäure | IV<br>Reaktivfarbstoff<br>(R···–CH–NH–C–CH–CH$_2$)<br>COOH O Br Br | V<br>Nuance auf Wolle |
|---|---|---|---|---|
| 7 | 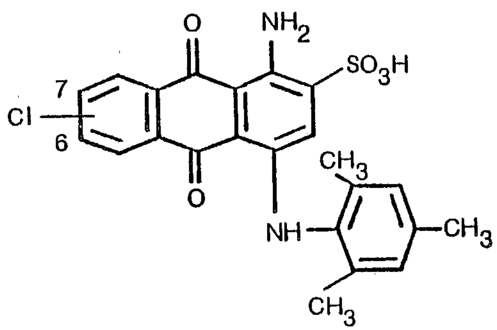 | 16 T | 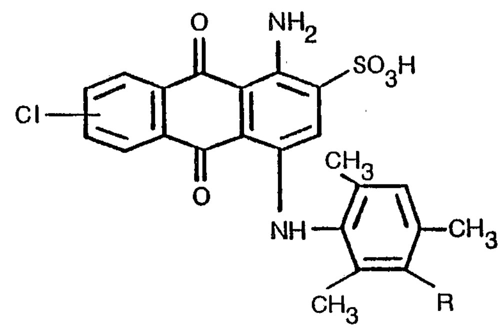 | neutrales Blau |
| 8 | 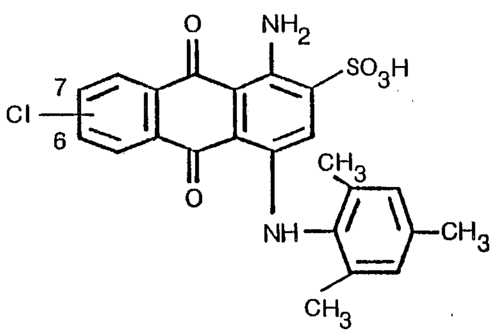 | 32 T | 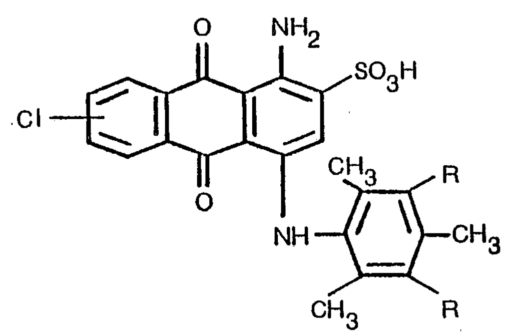 | neutrales Blau |

| I<br>Bsp. | II<br>Farbstoff | III<br>Teile Dibrom-propionamid-glykolsäure | IV<br>Reaktivfarbstoff<br>(R: 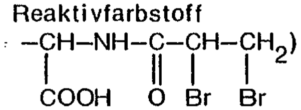) | V<br>Nuance auf Wolle |
|---|---|---|---|---|
| 9 | 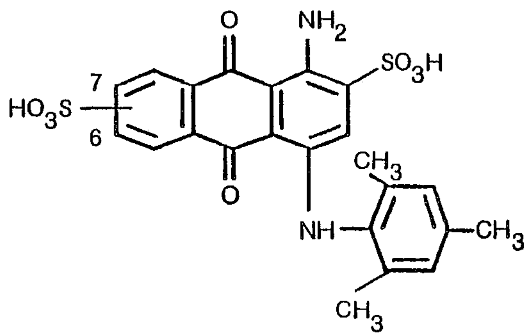 | 16 T | 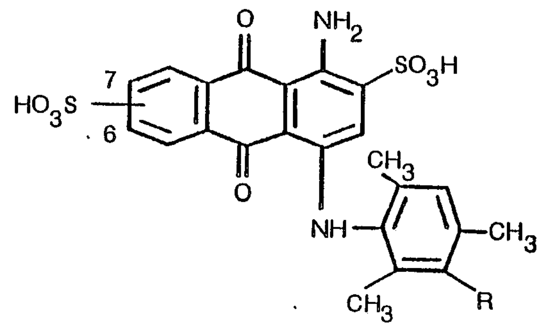 | neutrales Blau |
| 10 | 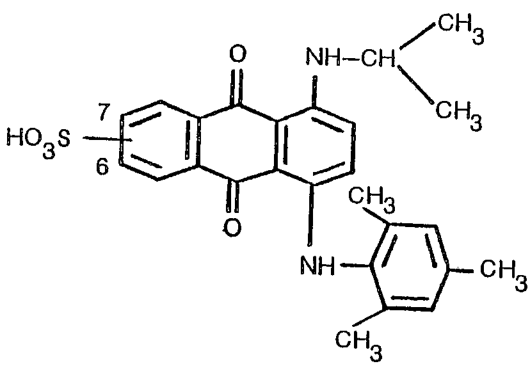 | 32 T | 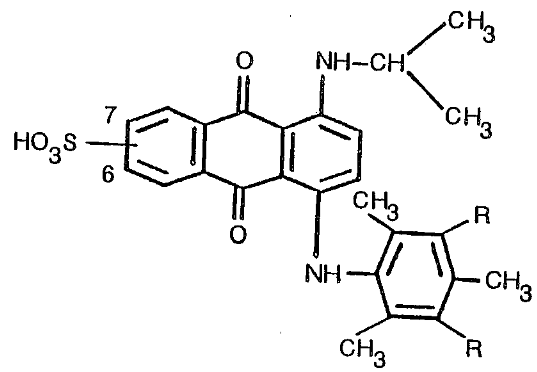 | grunstichiges Blau |

| I<br>Bsp. | II<br>Farbstoff | III<br>Teile Dibrompropionamidglykolsäure | IV<br>Reaktivfarbstoff<br>(R = –CH–NH–C–CH–$CH_2$)<br>COOH O Br Br | V<br>Nuance auf Wolle |
|---|---|---|---|---|
| 11 | 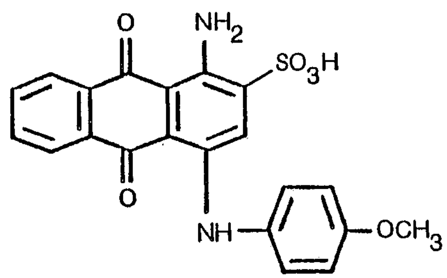 | 16 T | 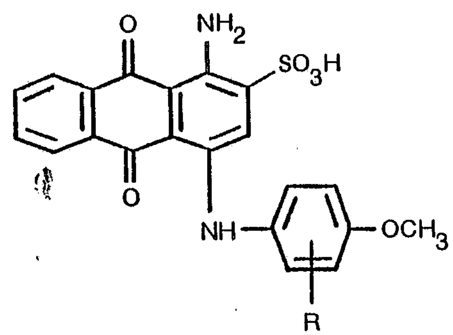 | grünstichiges Blau |
| 12 | 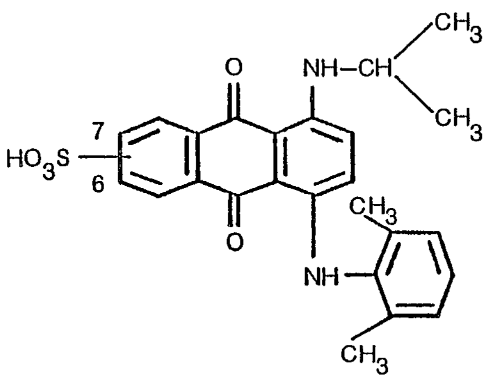 | 16 T | 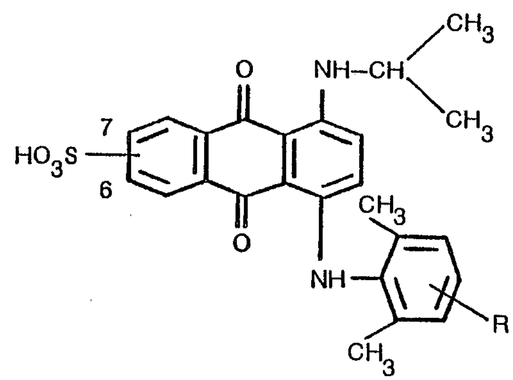 | grünstichiges Blau |

| I<br>Bsp. | II<br>Farbstoff | III<br>Teile Dibrom-propionamid-glykolsäure | IV<br>Reaktivfarbstoff<br>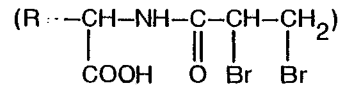 | V<br>Nuance auf Wolle |
|---|---|---|---|---|
| 13 | 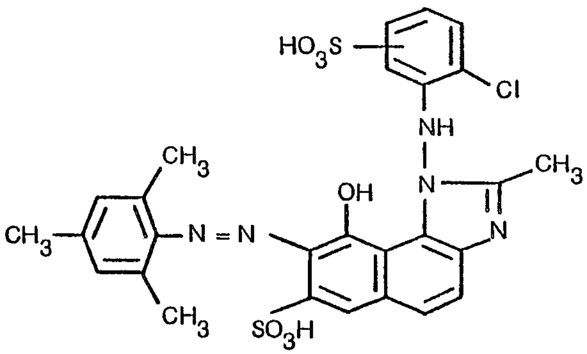 | 16 T | 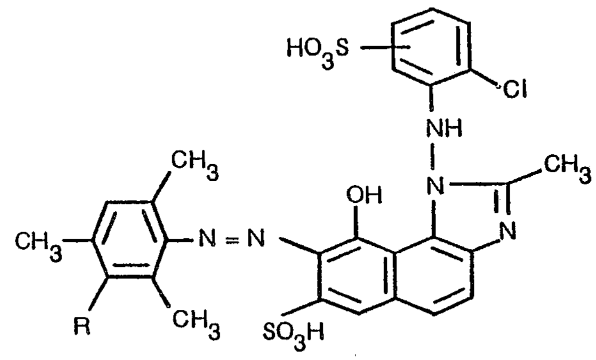 | Rot |
| 14 | 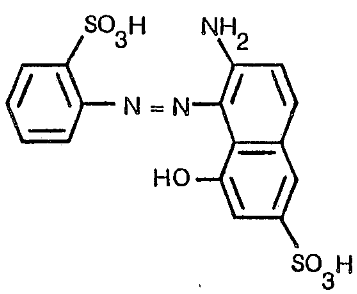 | 16 T | 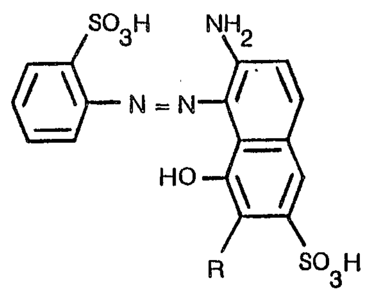 | blaustichig Rot |

| I<br>Bsp. | II<br>Farbstoff | III<br>Teile Dibrom-propionamid-glykolsäure | IV<br>Reaktivfarbstoff<br>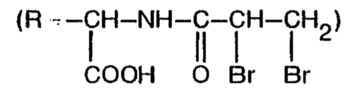 | V<br>Nuance auf Wolle |
|---|---|---|---|---|
| 15 | 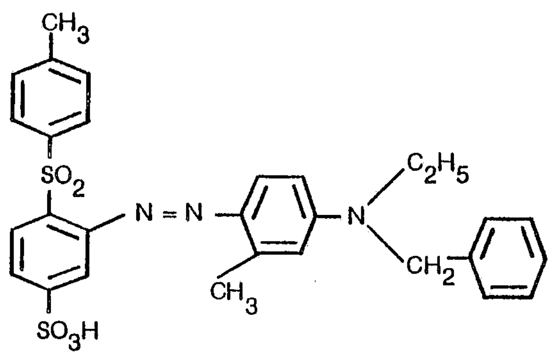 | 16 T | 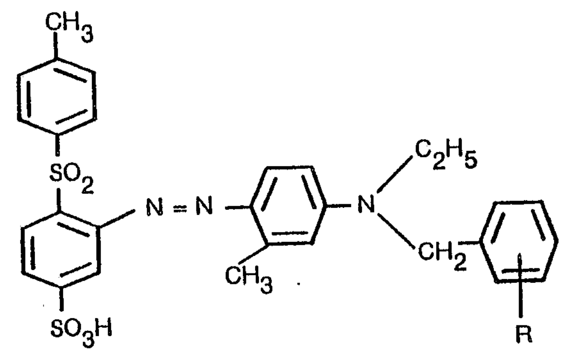 | Rot |
| 16 | 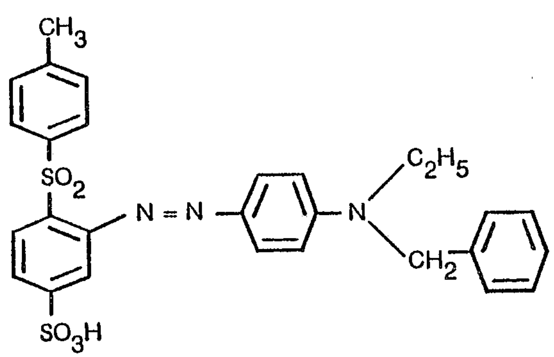 | 16 T | 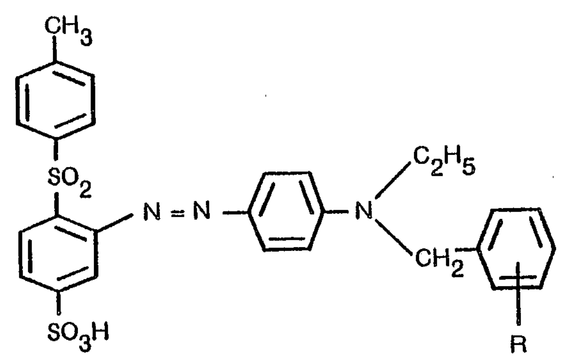 | Orange |

| I<br>Bsp. | II<br>Farbstoff | III<br>Teile Dibrom-propionamid-glykolsäure | IV<br>Reaktivfarbstoff<br>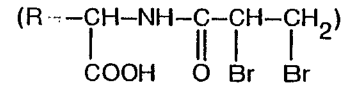 | V<br>Nuance auf Wolle |
|---|---|---|---|---|
| 17 | 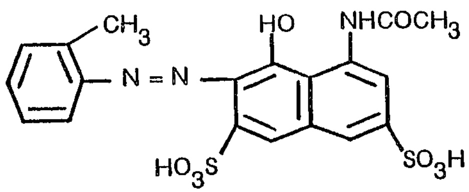 | 16 T | 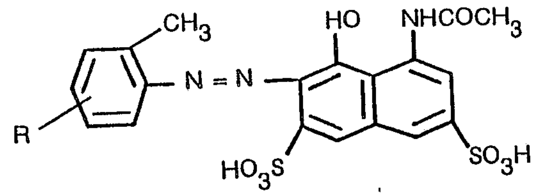 | Rot |
| 18 | 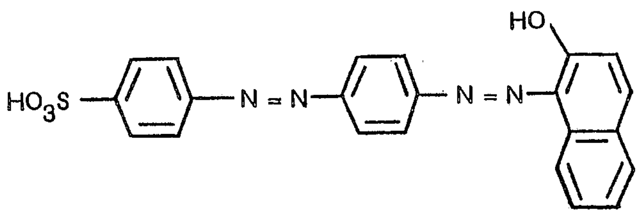 | 16 T | 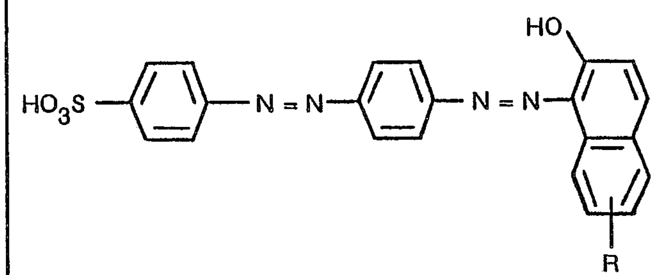 | Rot |
| 19 | 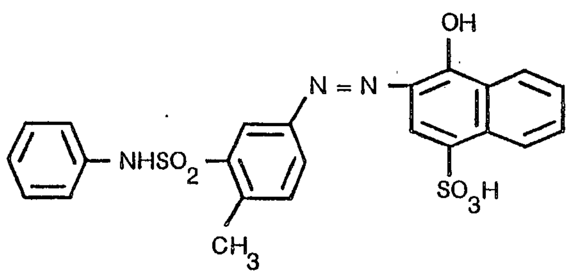 | 16 T | 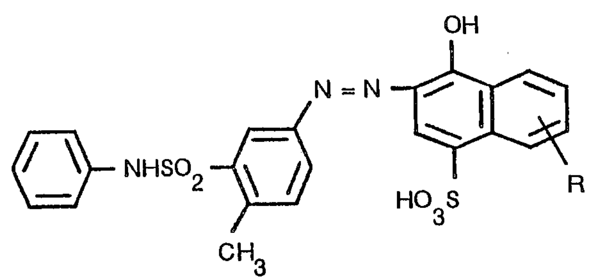 | Orange |

| I Bsp. | II Farbstoff | III Teile Dibrompropionamidglykolsäure | IV Reaktivfarbstoff 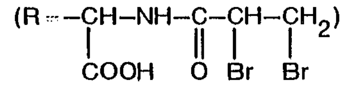 | V Nuance auf Wolle |
|---|---|---|---|---|
| 20 | 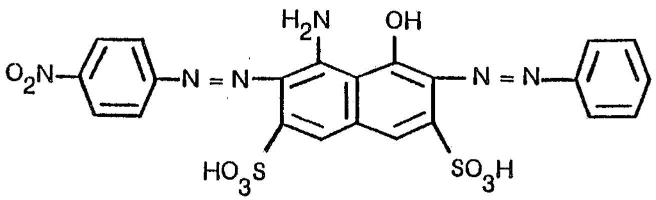 | 16 T | 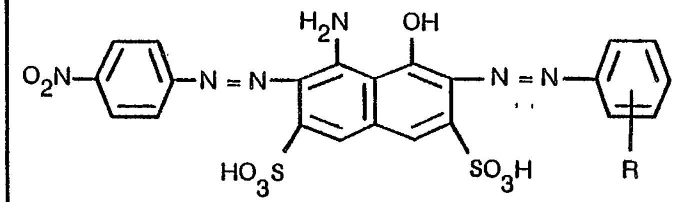 | Schwarz |
| 21 | 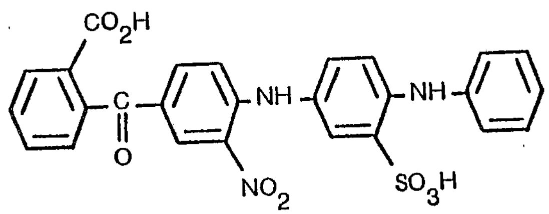 | 16 T | 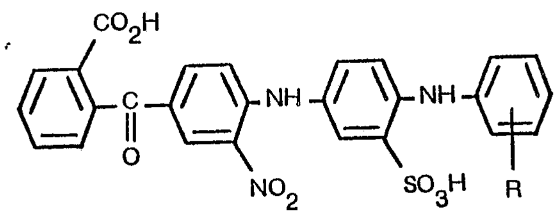 | Braun |
| 22 | 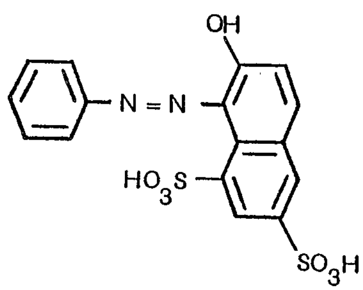 | 16 T | 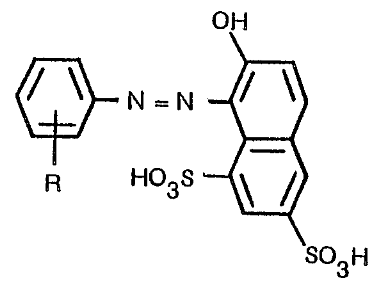 | Orange |

| I<br>Bsp. | II<br>Farbstoff | III<br>Teile Dibrom-propionamid-glykolsäure | IV<br>Reaktivfarbstoff<br>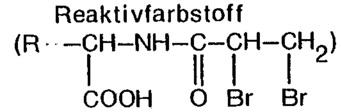 | V<br>Nuance auf Wolle |
|---|---|---|---|---|
| 23 | 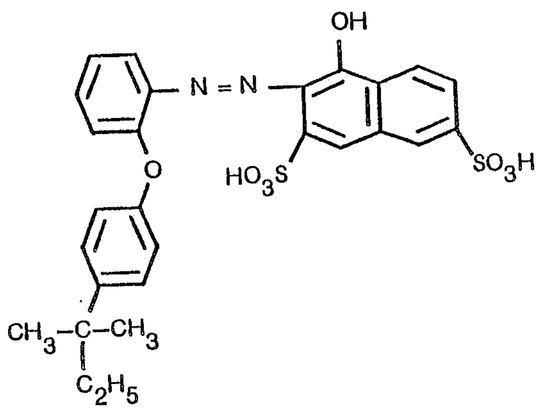 | 16 T | 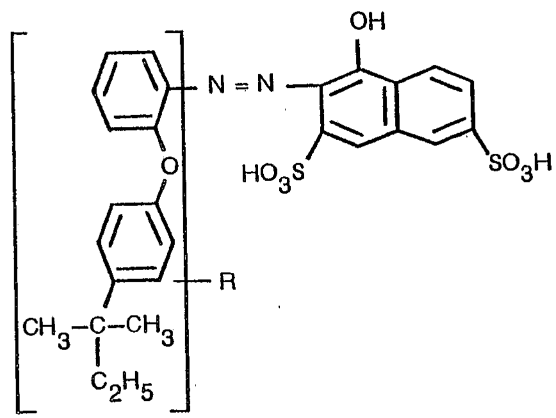 | Scharlach |
| 24 | 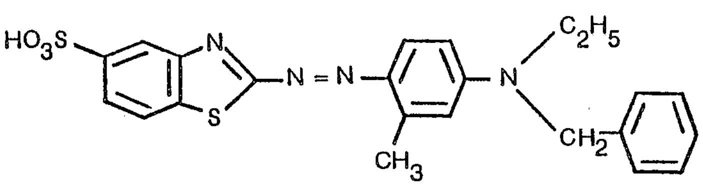 | 16 T | 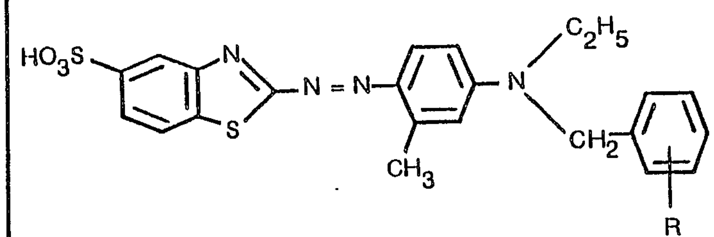 | Rot |

| I<br>Bsp. | II<br>Farbstoff | III<br>Teile Dibrom-propionamid-glykolsäure · | IV<br>Reaktivfarbstoff<br>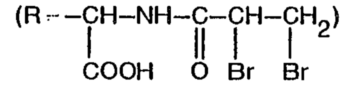 | V<br>Nuance auf Wolle |
|---|---|---|---|---|
| 25 | 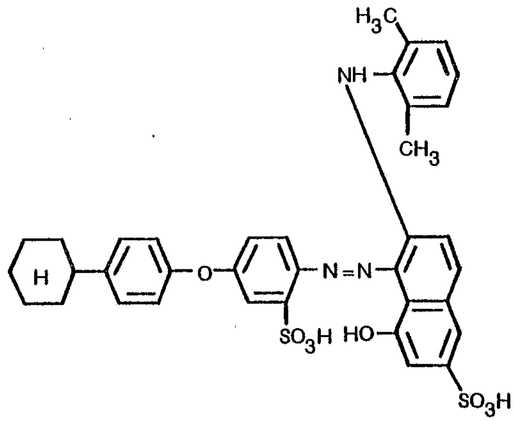 | 32 T | 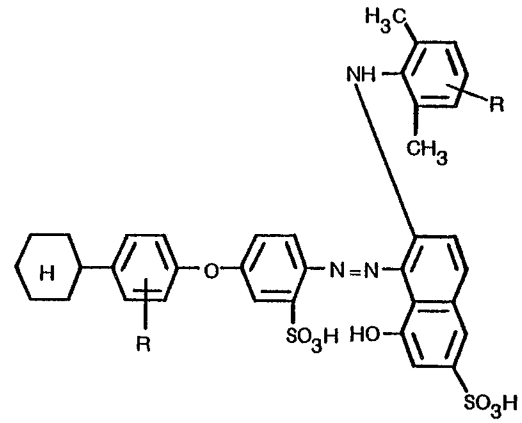 | Rot |
| 26 | 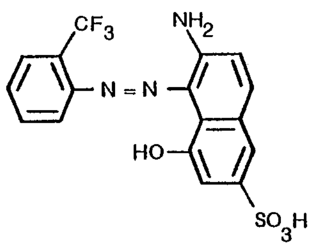 | 16 T | 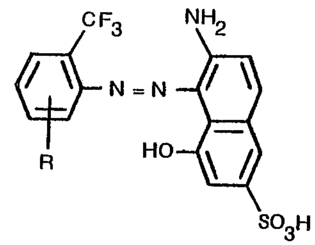 | Rot |
| 27 | 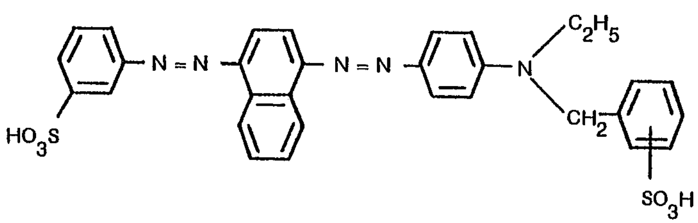 | 16 T | 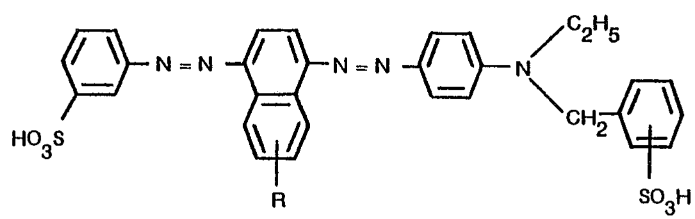 | Bordeaux |

| I<br>Bsp. | II<br>Farbstoff | III<br>Teile Dibrom-propionamid-glykolsäure | IV<br>Reaktivfarbstoff<br>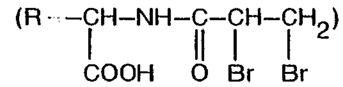 | V<br>Nuance auf Wolle |
|---|---|---|---|---|
| 28 | 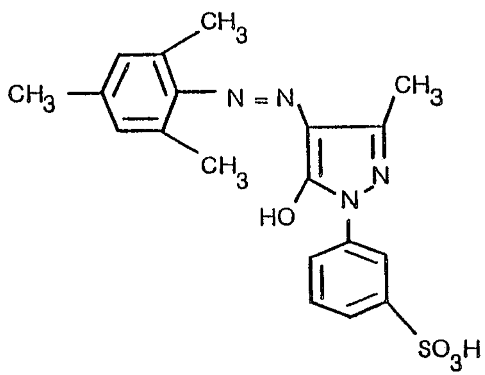 | 16 T | 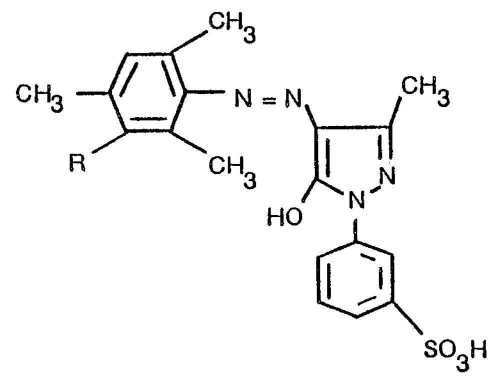 | gelb |
| 29 | 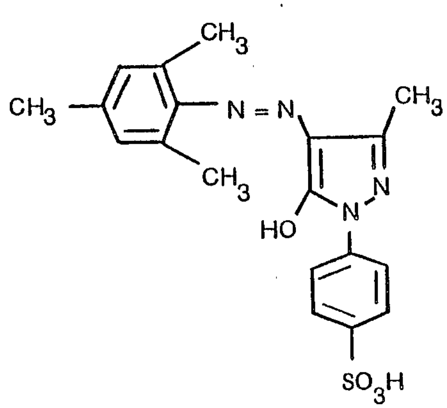 | 16 T | 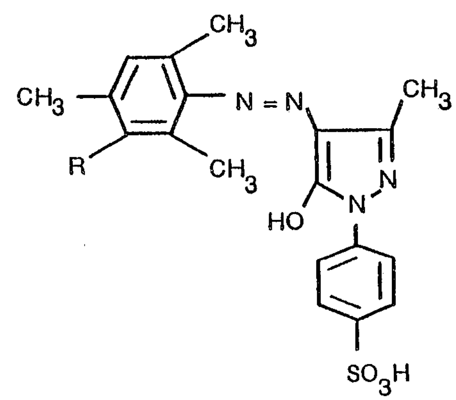 | gelb |

| I<br>Bsp. | II<br>Farbstoff | III<br>Teile Dibrom-propionamid-glykolsäure | IV<br>Reaktivfarbstoff<br>$(R = -\underset{COOH}{\underset{\vert}{CH}}-NH-\underset{O}{\underset{\Vert}{C}}-\underset{Br}{\underset{\vert}{CH}}-\underset{Br}{\underset{\vert}{CH_2}})$ | V<br>Nuance auf Wolle |
|---|---|---|---|---|
| 30 | 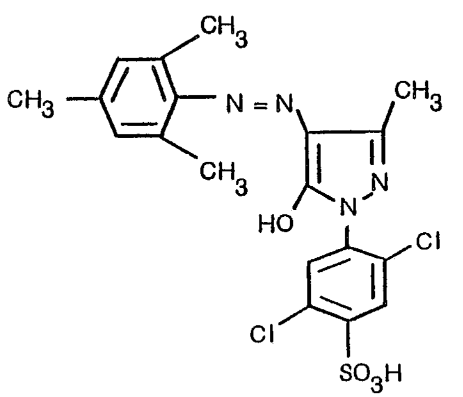 | 16 T | 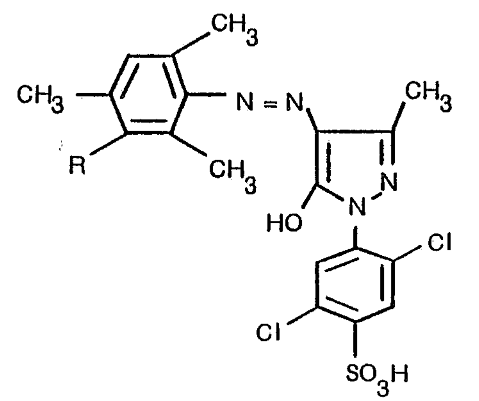 | gelb |
| 31 | 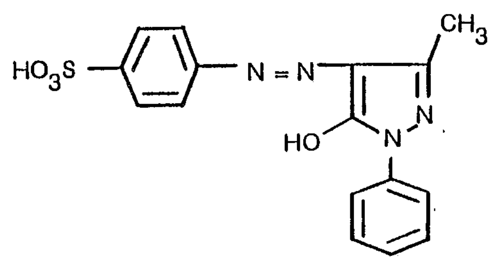 | 16 T | 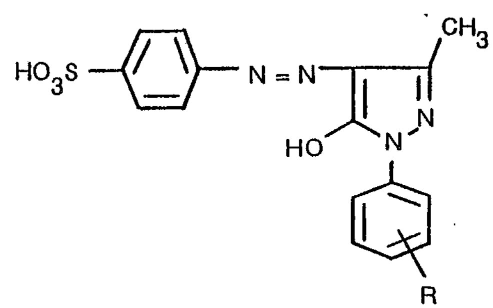 | gelb |

| I<br>Bsp. | II<br>Farbstoff | III<br>Teile Dibrom-propionamid-glykolsäure | IV<br>Reaktivfarbstoff<br>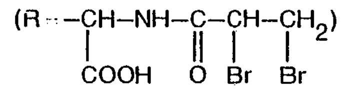 | V<br>Nuance auf Wolle |
|---|---|---|---|---|
| 32 | 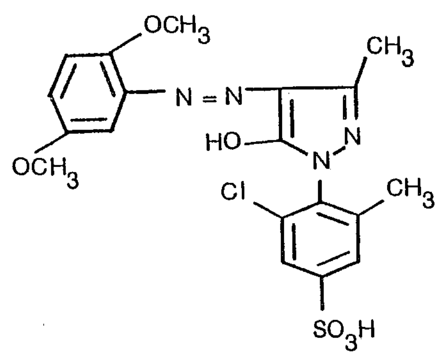 | 16 T | 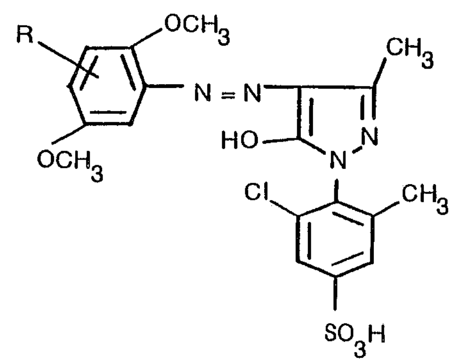 | gelb |
| 33 | 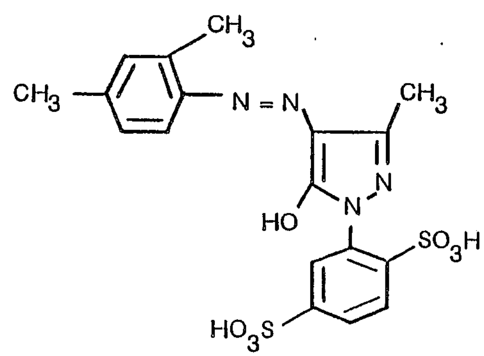 | 16 T | 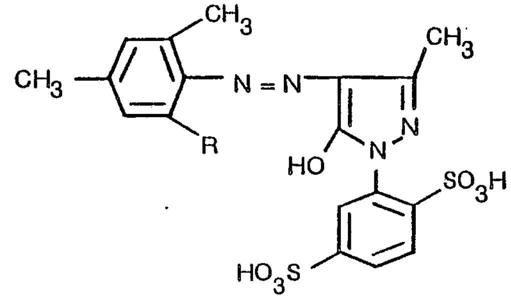 | gelb |

| I<br>Bsp. | II<br>Farbstoff | III<br>Teile Dibrom-propionamid-glykolsäure | IV<br>Reaktivfarbstoff<br>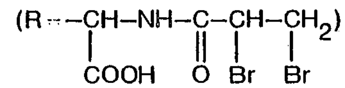 | V<br>Nuance auf Wolle |
|---|---|---|---|---|
| 34 | 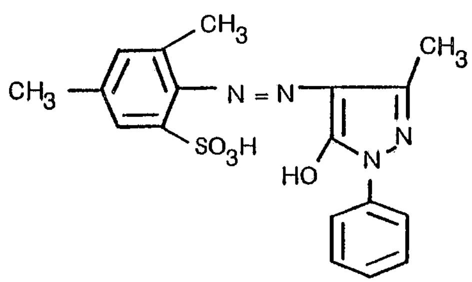 | 16 T | 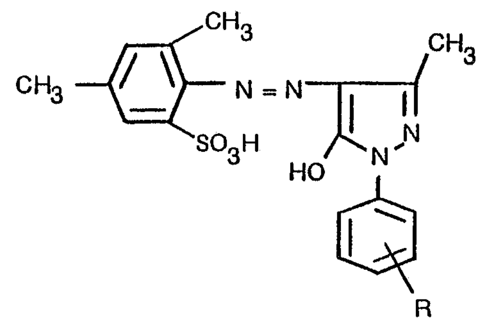 | gelb |
| 35 | 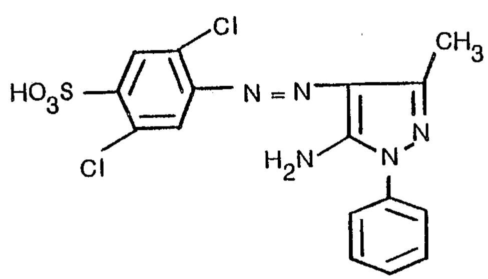 | 16 T | 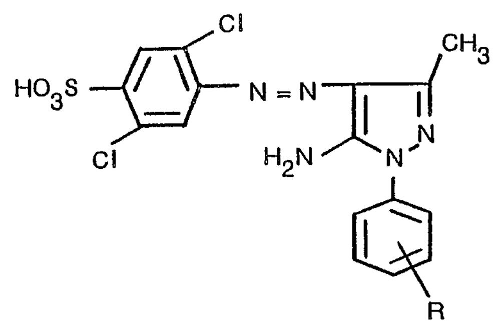 | gelb |

| I<br>Bsp. | II<br>Farbstoff | III<br>Teile Dibrom-propionamid-glykolsäure | IV<br>Reaktivfarbstoff<br>(R = $-\underset{\mid}{CH}-NH-\overset{\parallel}{C}-\underset{\mid}{CH}-\underset{\mid}{CH_2}$)<br>COOH O Br Br | V<br>Nuance auf Wolle |
|---|---|---|---|---|
| 36 | 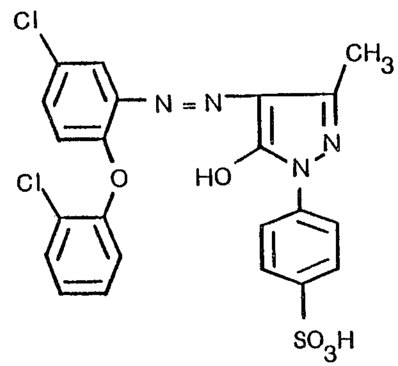 | 16 T | 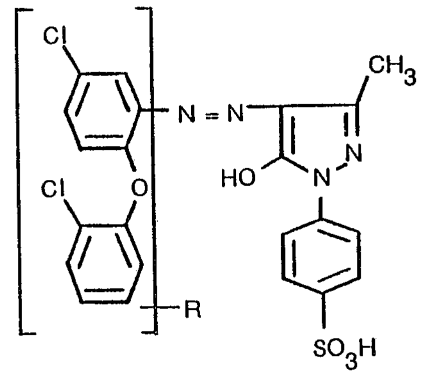 | gelb |
| 37 | 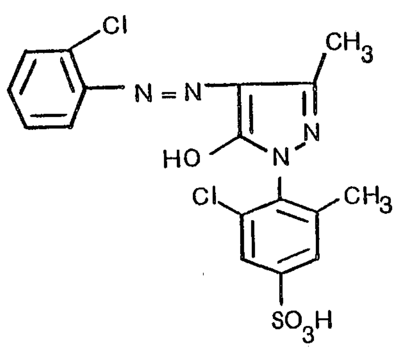 | 16 T | 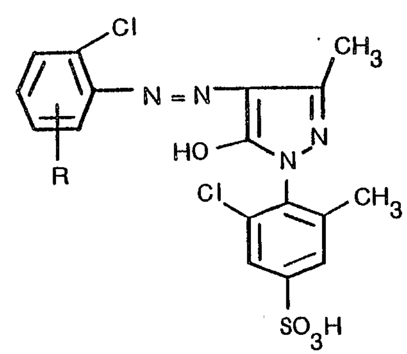 | gelb |

| I<br>Bsp. | II<br>Farbstoff | III<br>Teile Dibrom-propionamid-glykolsäure | IV<br>Reaktivfarbstoff<br>(R = $-\underset{\mid \atop COOH}{CH}-NH-\underset{\parallel \atop O}{C}-\underset{\mid \atop Br}{CH}-\underset{\mid \atop Br}{CH_2}$) | V<br>Nuance auf Wolle |
|---|---|---|---|---|
| 38 | 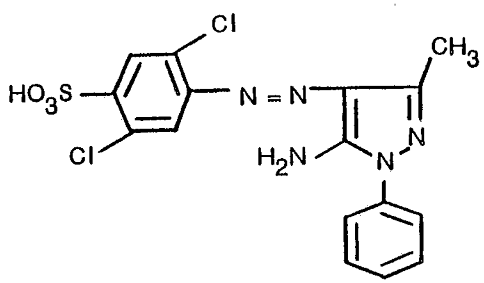 | 16 T | 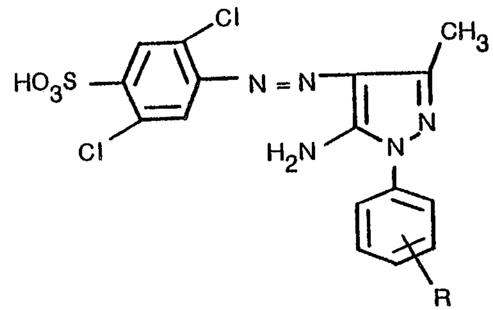 | gelb |
| 39 | 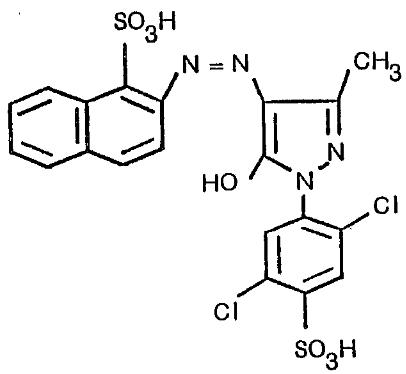 | 16 T | 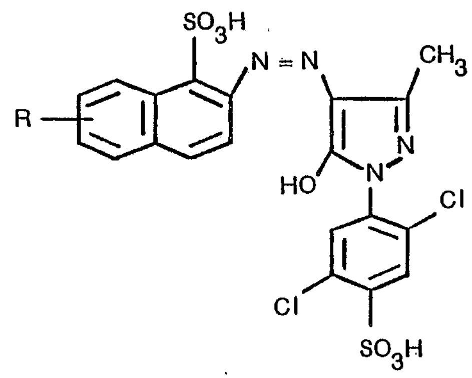 | gelb |
| 40 | 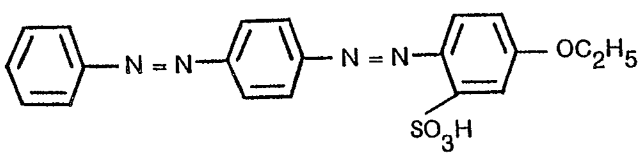 | 16 T | 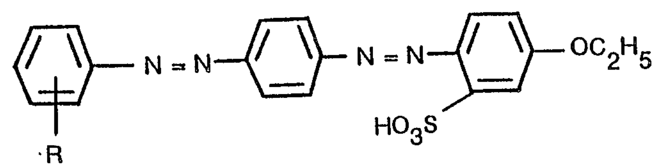 | goldgelb |

*Beispiel 41*: Bei einer Temperatur von 5—10° trägt man eine homogene Mischung aus 25 Teilen der Verbindung der Formel

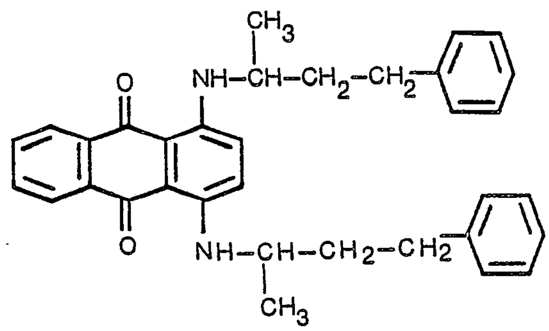

und 32 Teilen Dibrompropionamidoglykolsäure (erhalten gemäss dem Beispiel 1) in 180 Teile 90%ige Schwefelsäure ein und rührt anschliessend die erhaltene Lösung während 15 Stunden bei derselben Temperatur. Zur Sulfierung lässt man 180 Teile 65%iges Oleum bei 10—15° zulaufen und giesst das Sulfonierungsgemisch in eine Eis-Wasser-Mischung. Der ausgeschiedene bis-Reaktivfarbstoff der Formel:

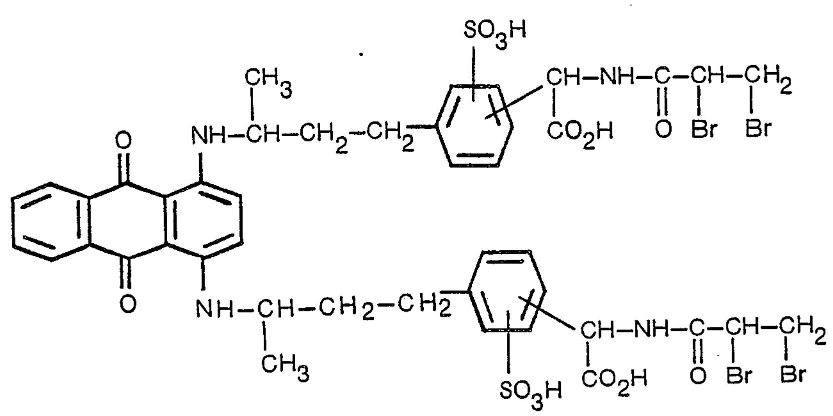

wird abgesaugt und nach üblicher Art als Natriumsalz isoliert.

Auf Wolle appliziert, erhält man sehr brillante blaue Färbungen, welche sich durch eine gute Lichtechtheit und sehr gute Nassechteiten auszeichnen.

Verwendet man, bei gleichem Vorgehen, anstelle der eingangs erwähnten Anthrachinonverbindung äquivalente Teile der in der folgenden Tabelle in Kolonne II aufgeführten Farbstoffe und setzt diese mit den in Kolonne III angegebenen Teilen der Dibrompropionamidoglykolsäure um, und sulfiert sie, so erhält man Reaktivfarbstoffe gemäss der Kolonne IV, deren Farbnuancen auf Wolle in Kolonne V der Tabelle angegeben sind.

| I<br>Bsp. | II<br>Farbstoff | III<br>Teile Dibrom-propionamid-glykolsäure | IV<br>Reaktivfarbstoff<br>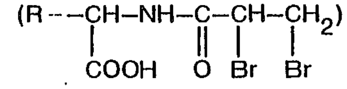 | V<br>Nuance auf Wolle |
|---|---|---|---|---|
| 42 | 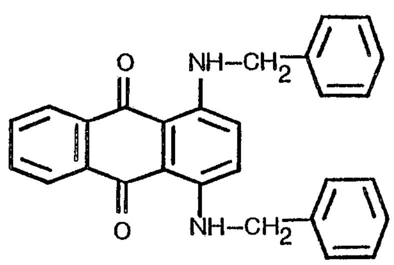 | 32 T | 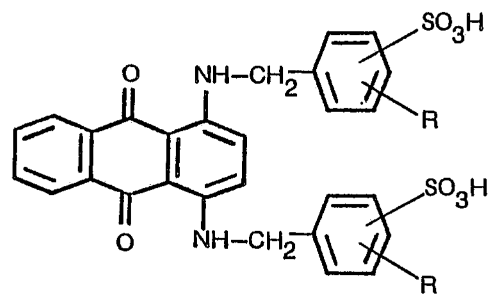 | neutrales Blau |
| 43 | 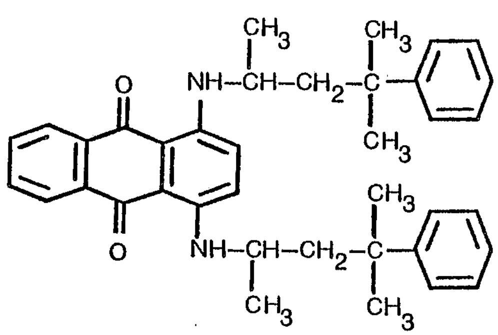 | 32 T | 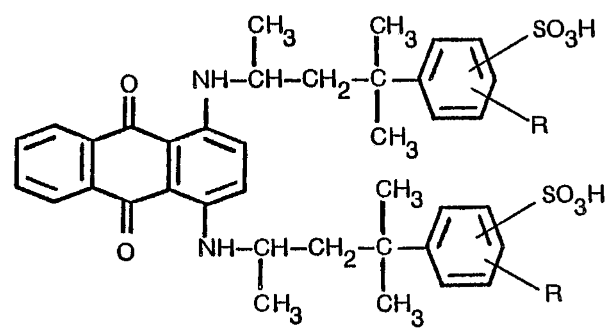 | neutrales Blau |

| I<br>Bsp. | II<br>Farbstoff | III<br>Teile Dibrom-propionamid-glykolsäure | IV<br>Reaktivfarbstoff<br>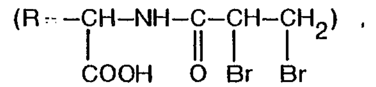 | V<br>Nuance auf Wolle |
|---|---|---|---|---|
| 44 | 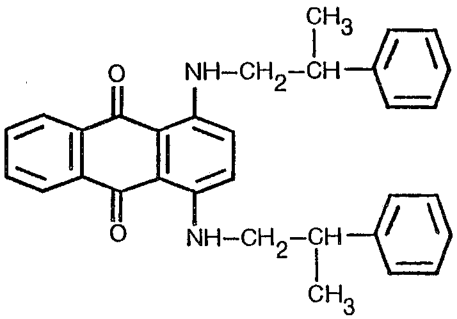 | 32 T | 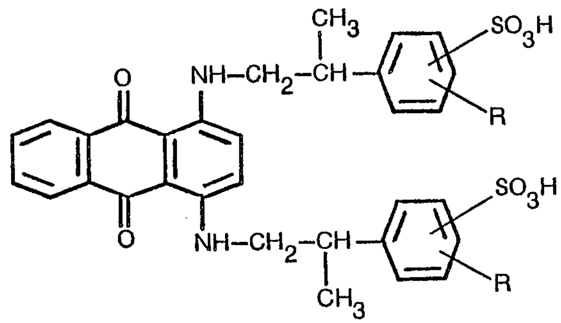 | Blau |
| 45 | 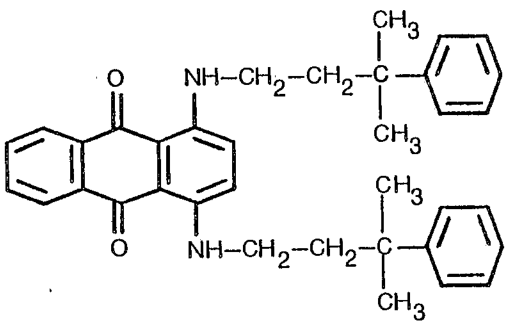 | 32 T | 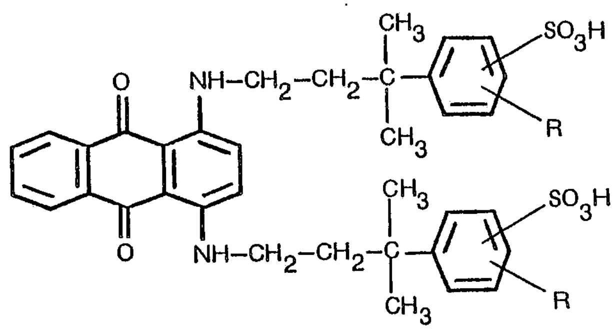 | neutrales Blau |

| I<br>Bsp. | II<br>Farbstoff | III<br>Teile Dibrom-propionamid-glykolsäure | IV<br>Reaktivfarbstoff<br>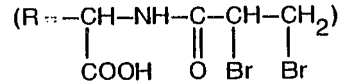 | V<br>Nuance auf Wolle |
|---|---|---|---|---|
| 46 | 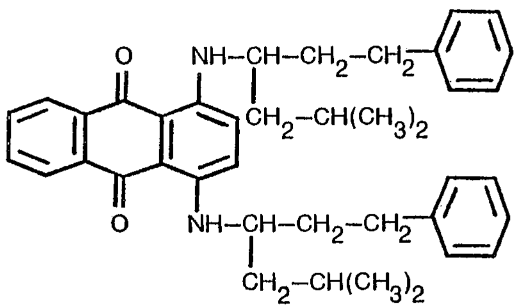 | 32 T | 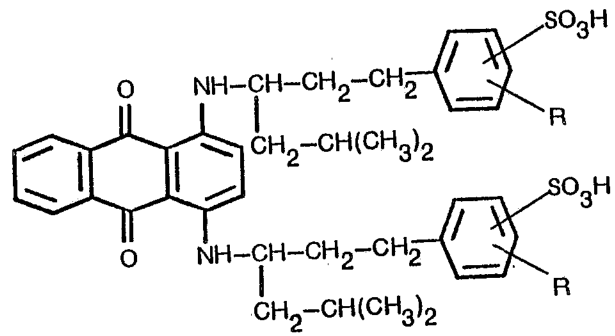 | neutrales Blau |
| 47 | 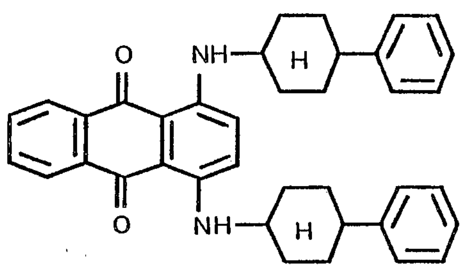 | 32 T | 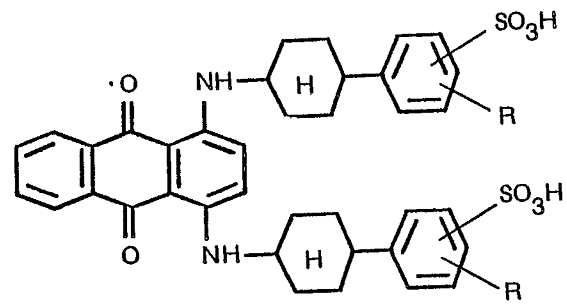 | neutrales Blau |

| I<br>Bsp. | II<br>Farbstoff | III<br>Teile Dibrom-propionamid-glykolsäure | IV<br>Reaktivfarbstoff<br>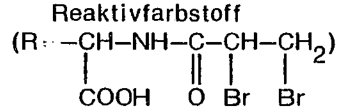 | V<br>Nuance auf Wolle |
|---|---|---|---|---|
| 48 | 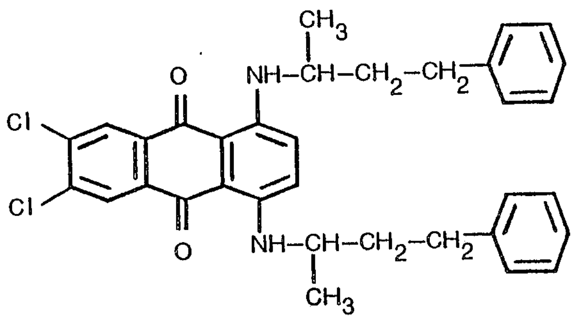 | 32 T | 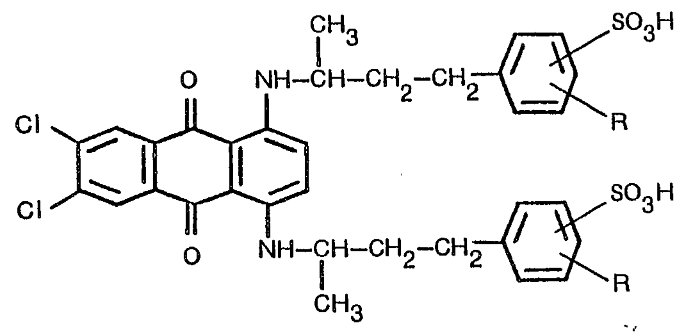 | grünstichiges Blau |
| 49 | 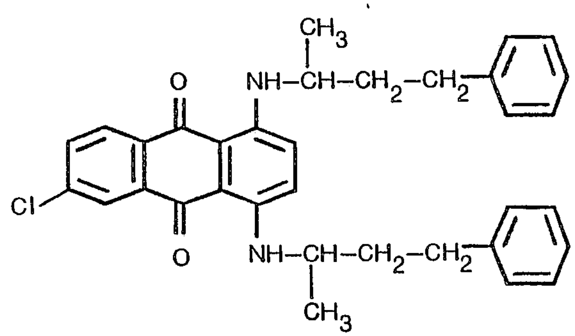 | 32 T | 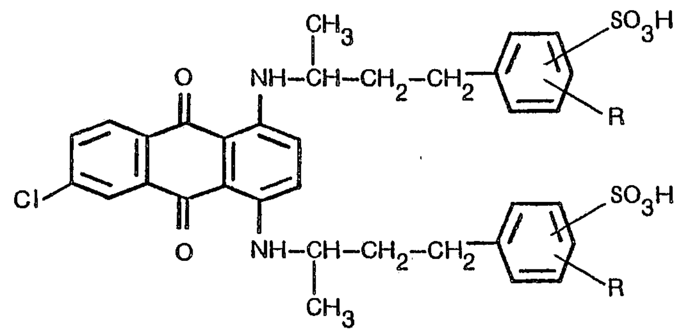 | grünstichiges Blau |

| I<br>Bsp. | II<br>Farbstoff | III<br>Teile Dibrom-propionamid-glykolsäure | IV<br>Reaktivfarbstoff<br>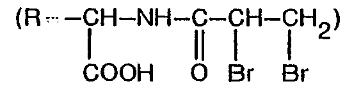 | V<br>Nuance auf Wolle |
|---|---|---|---|---|
| 50 | 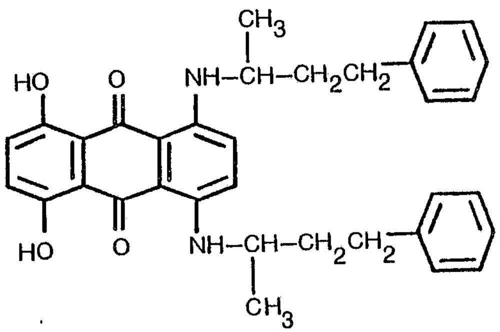 | 32 T | 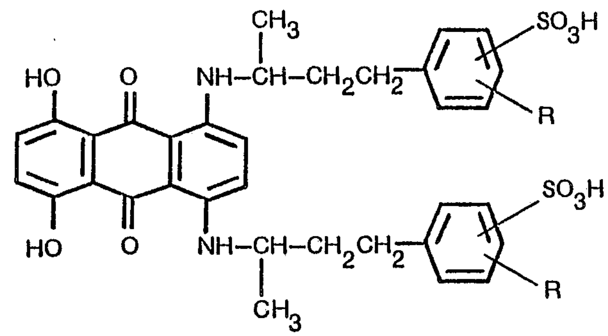 | grünstichiges Blau |
| 51 | 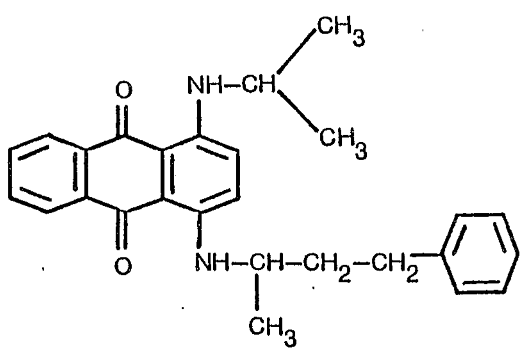 | 16 T | 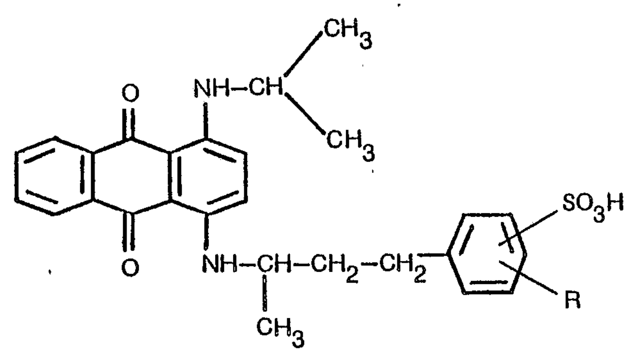 | neutrales Blau |

| I<br>Bsp. | II<br>Farbstoff | III<br>Teile Dibrom-propionamid-glykolsäure | IV<br>Reaktivfarbstoff<br>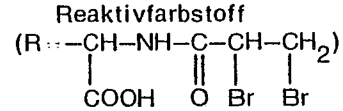 | V<br>Nuance auf Wolle |
|---|---|---|---|---|
| 52 | 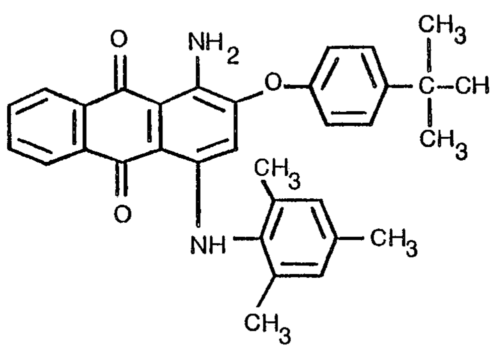 | 16 T | 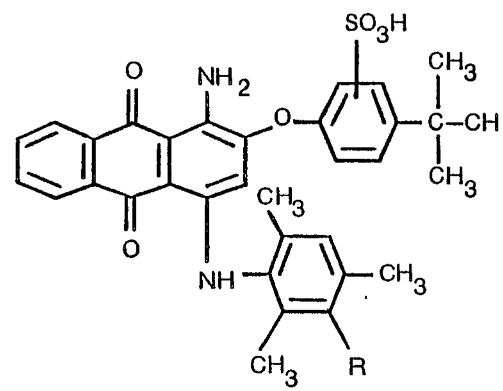 | violett |
| 53 | 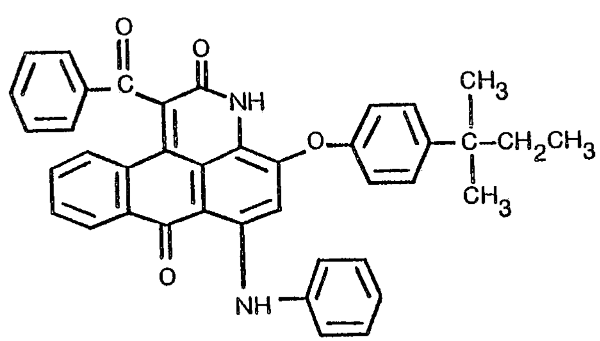 | 16 T | 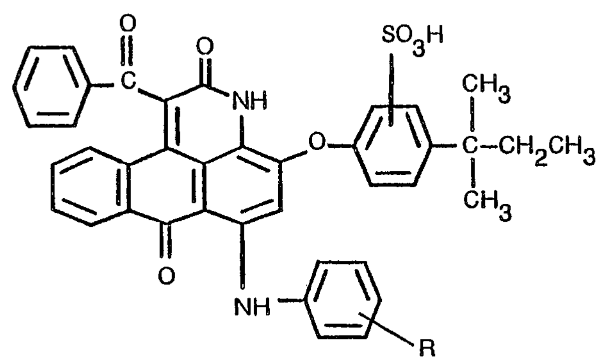 | blaustichiges Rot |

| I<br>Bsp. | II<br>Farbstoff | III<br>Teile Dibrom-propionamid-glykolsäure | IV<br>Reaktivfarbstoff<br>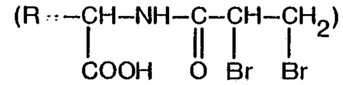 | V<br>Nuance auf Wolle |
|---|---|---|---|---|
| 54 | 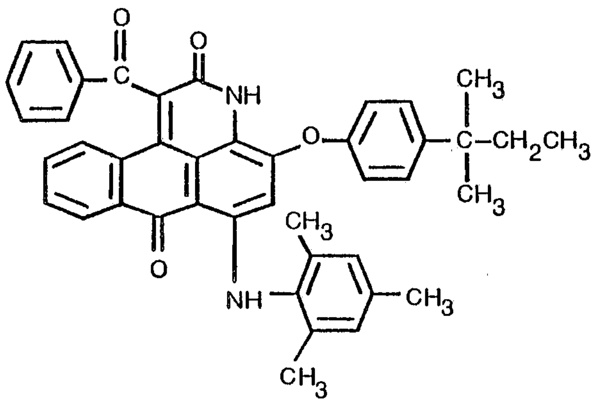 | 16 T | 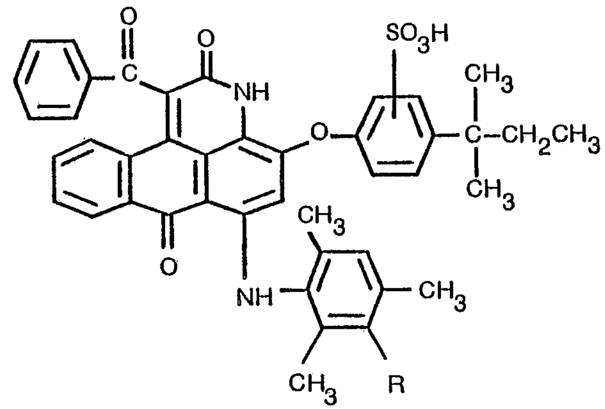 | Rot |
| 55 | 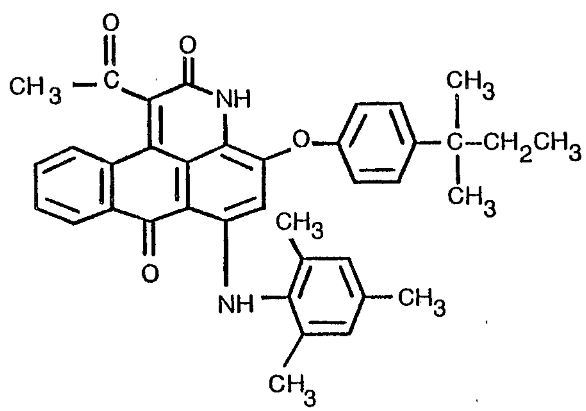 | 16 T | 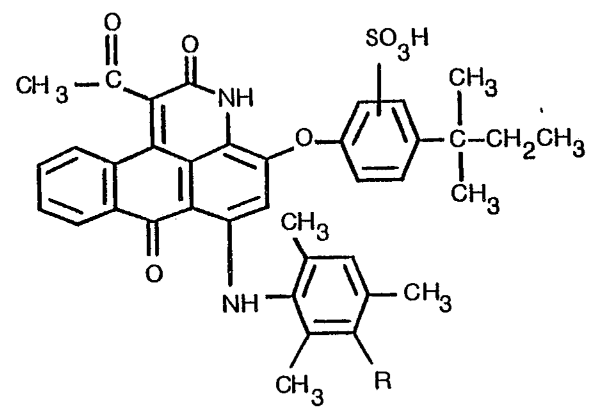 | Rot |

| I<br>Bsp. | II<br>Farbstoff | III<br>Teile Dibrom-<br>propionamid-<br>glykolsäure | IV<br>Reaktivfarbstoff<br>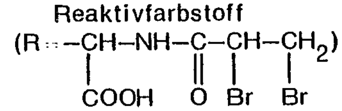 | V<br>Nuance auf Wolle |
| --- | --- | --- | --- | --- |
| 56 | 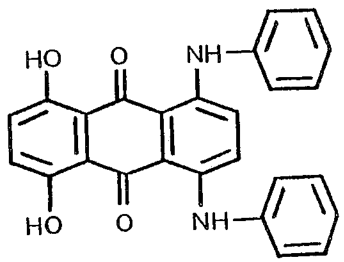 | 32 T | 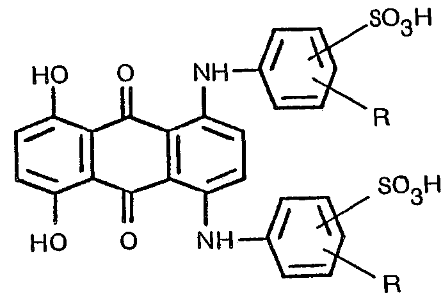 | grün |
| 57 | 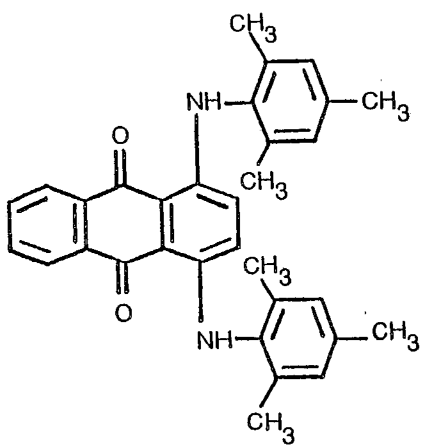 | 32 T | 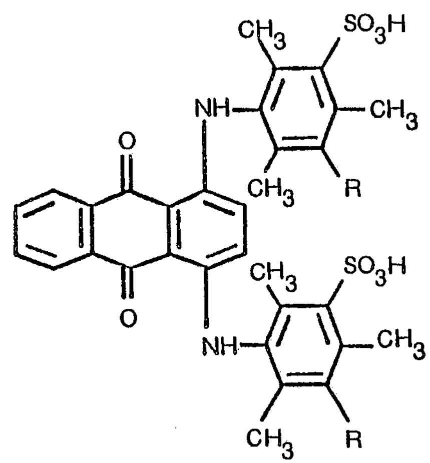 | neutrales Blau |

| I<br>Bsp. | II<br>Farbstoff | III<br>Teile Dibrom-propionamid-glykolsäure | IV<br>Reaktivfarbstoff<br>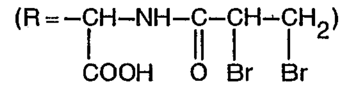 | V<br>Nuance auf Wolle |
|---|---|---|---|---|
| 58 | 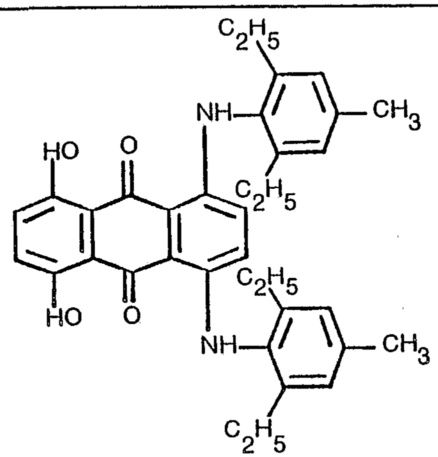 | 32 T | 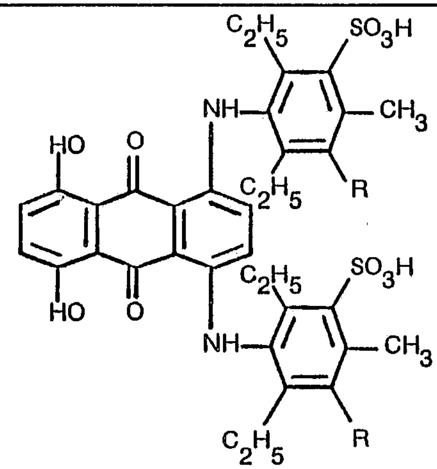 | grünst. Blau |
| 59 | 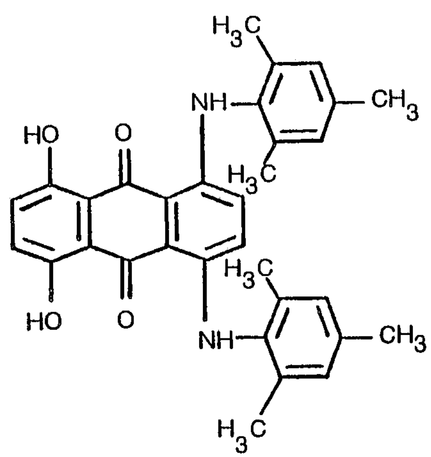 | 32 T | 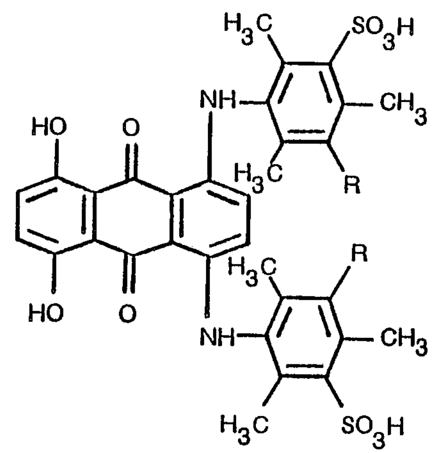 | grünst. Blau |

Färbebeispiel

In ein Färbebad, das in 3000 Teilen Wasser 10 Teile kristallisiertes Natriumsulfat, 6 Teile 40%ige Essigsäure, 0,5 Teile eines Kondensationsproduktes aus höheren aliphatischen Aminen mit Aethylenoxyd und 2 Teilen des im Beispiel 1 beschriebenen Farbstoffes enthält, geht man bei 50 bis 80° mit 100 Teilen Wollstückgarn ein. Im Verlaufe einer halben Stunde wird das Bad auf Siedetemperatur erhitzt und dann 1 Stunde lang kochend gefärbt. Hierauf wird die Wolle gespült und getrocknet. Man erhält eine gleichmässige blaue Färbung.

**Patentansprüche**

1. Farbstoffe der Formel

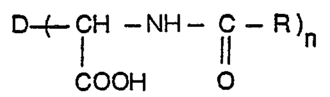

(1)

worin D ein organischer Farbstoffrest ist, der mindestens eine wasserlöslichmachende Gruppe enthält, R einen Halogenalkylrest mit 1 bis 2 C-Atomen oder einen Halogenacrylrest bedeutet und n eine ganze Zahl von 1 bis 4 ist und wobei jede Gruppe der Formel

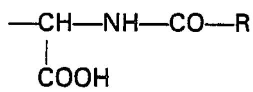

über ein aromatisches Kolenstoffatom an D gebunden ist.

2. Farbstoffe gemäss Anspruch 1, worin D ein Farbstoffrest der Anthrachinon-, Azo-, Dioxazin-, oder Phthalocyaninreihe ist, der 1 bis 3, vorzugsweise 1 bis 2 Sulfogruppen enthält.

3. Farbstoffe gemäss Anspruch 1, worin R einen Rest der Formel $—CH_2Cl$, $—CH_2Br$, $—CCl{=}CH_2$, $—CBr{=}CH_2$, $—CHCl—CH_2Cl$ oder $—CHBr—CH_2Br$ bedeutet.

4. Farbstoffe gemäss den Ansprüchen 1 bis 3, worin D ein Rest der Anthrachinonreihe oder Azoreihe ist, der 1 bis 2 Sulfogruppen enthält und n 1 oder 2 bedeutet.

5. Farbstoffe gemäss den Ansprüchen 1 bis 4 der Formel

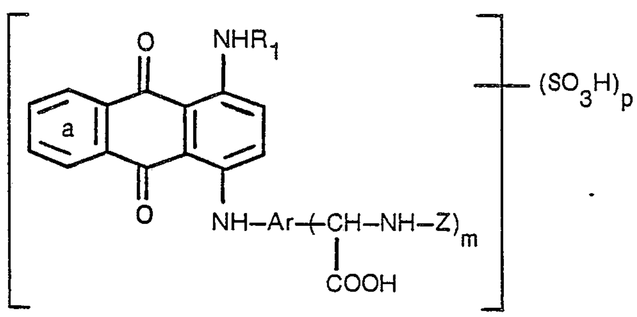

(3)

worin $R_1$ Wasserstoff, $C_{1-5}$-Alkyl, Aralkyl, Cycloalkyl mit bis zu 9 C-Atomen oder Aryl, Ar einen Arylenrest, Z einen $\alpha,\beta$-Dichloro- oder -Dibrompropionyl- einen $\alpha$-Chlor- oder $\alpha$-Bromacryloyl- oder einen Chloracetylrest, m 1 oder 2 und p 1 oder 2 bedeutet und worin der Ring a gegebenenfalls mit Hydroxyl oder Halogen substituiert ist.

6. Farbstoffe gemäss Anspruch 5, worin $R_1$ Wasserstoff, Cycloalkyl mit bis zu 9 C-Atomen oder ein $C_{1-5}$-Alkylrest, vorzugsweise Isopropyl oder Isobutyl ist, Ar einen gegebenenfalls mit Methyl substituierten Phenylenrest und Z die Dibrompropionylgruppe bedeutet.

7. Farbstoffe gemäss den Ansprüche 1 bis 4 der Formel

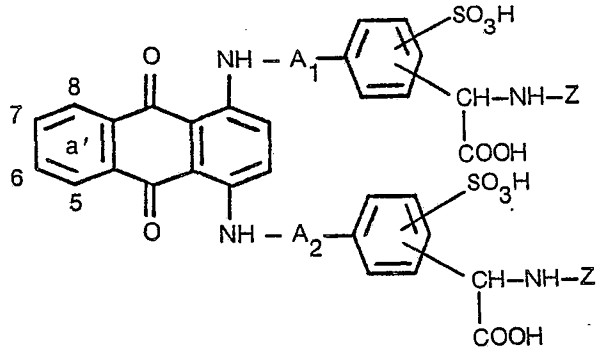

(4)

worin $A_1$ und $A_2$ je einen gegebenenfalls verzweigten Alkylenrest mit bis 5 Kohlenstoffatomen und Z einen $\alpha,\beta$-Dichlor- oder -Dibrompropionyl- einen $\alpha$-Chlor- oder $\alpha$-Bromacryloyl- oder einen Chloracetylrest bedeutet und worin der Ring a' gegebenenfalls mit Hydroxyl oder Halogen substituiert ist.

8. Farbstoffe gemäss den Ansprüchen 1 bis 4 der Formel

$$[D—N=N—K]\!\!-\!\!(\underset{\displaystyle COOH}{\underset{|}{CH}}—NH—Z)_m \qquad (5)$$

worin D der Rest einer Diazokomponente der Benzol- oder Naphthalin- reihe und K den Rest einer Kupplungskomponente bedeutet, Z dasselbe wie in Anspruch 5 und m 1 oder 2 ist.

9. Farbstoffe gemäss Anspruch 8, worin K den Rest einer Naphtholsulfonsäure, eines Naphtho-(1,2-d)-imidazols, eines Acetoacetarylids oder eines 5-Aminopyrazols oder Pyrazol-5-ons ist.

10. Farbstoffe gemäss Anspruch 7 oder 9, worin Z die Dibrompropionylgruppe ist.

11. Farbstoff gemäss Anspruch 5, der Formel

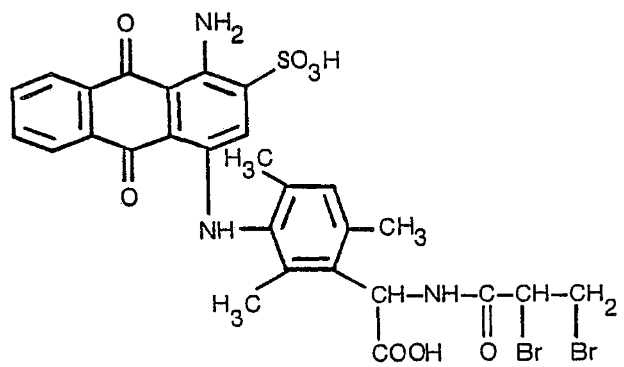

12. Verfahren zur Herstellung von Farbstoffen der Formel

$$D\!-\!(\underset{\displaystyle COOH}{\underset{|}{CH}} - NH - \underset{\displaystyle O}{\underset{\|}{C}} - R)_n \qquad (1)$$

worin D ein organischer Farbstoffrest ist, der mindestens eine wasserlöslichmachende Gruppe enthält, R einen Halogenalkylrest mit 1 bis 2 C-Atomen oder einen Halogenacrylrest bedeutet und n eine ganze Zahl von 1 bis 4 ist und wobei jede Gruppe der Formel

$$—\underset{\displaystyle COOH}{\underset{|}{CH}}—NH—CO—R$$

über ein aromatisches Kohlenstoffatom an D gebunden ist, dadurch gekennzeichnet, dass man einen organischen Farbstoff $D\!-\!(H)_n$ mit einer Halogenalkanoylamidoglykolsäure oder einer Halogenacryloylamidoglykolsäure umsetzt.

13. Verfahren gemäss Anspruch 12, dadurch gekennzeichnet, dass man von einem Farbstoff der Anthrachinon-, Azo-, Dioxazin- oder Phthalocyaninreihe ausgeht, der 1 bis 3, vorzugsweise 1 bis 2 Sulfogruppen enthält.

14. Verfahren gemäss Anspruch 12, dadurch gekennzeichnet, dass man von einer Halogenalkanoyl- oder Halogenacryloylamidoglykolsäure der Formel

$$\underset{\displaystyle COOH}{HO—\overset{}{CH}}—NH—CO—R \qquad (8)$$

ausgeht, worin R einen Rest der Formel $—CH_2Cl$, $—CH_2Br$, $—CHI{=}CH_2$, $—CBr{=}CH_2$, $—CHCl—CH_2Cl$ oder $—CHBr—CH_2Br$ bedeutet.

15. Verfahren gemäss den Ansprüchen 12 bis 14, dadurch gekennzeichnet, dass man von einem Farbstoff der Formel

$$D{-}(-H)_n \qquad (6)$$

ausgeht, worin D ein Rest der Anthrachinonreihe oder Azoreihe ist, der 1 bis 2 Sulfogruppen enthält und n 1 oder 2 bedeutet.

16. Verfahren gemäss den Ansprüchen 12 bis 15, dadurch gekennzeichnet, dass man einen Farbstoff der Formel

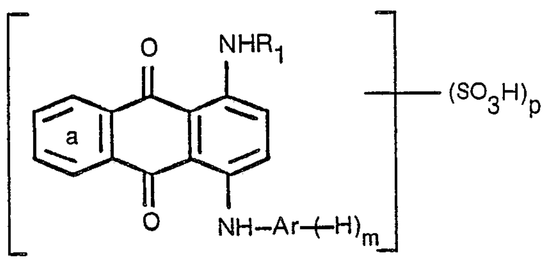

(9)

worin $R_1$ Wasserstoff, $C_{1-5}$-Alkyl, Aralkyl, Cycloalkyl mit bis zu 9 C-Atomen oder Aryl, Ar einen Arylenrest, mit 1 oder 2 und p 1 oder 2 bedeutet und worin der Ring a gegebenenfalls mit Hydroxyl oder Halogen substituiert ist, mit m Aequivalenten $\alpha,\beta$-Dichlor- oder $\alpha,\beta$-Dibrompropionamidoglykolsäure, $\alpha$-Chlor- oder $\alpha$-Bromacrylamidoglykolsäure oder Chloracetamidoglykolsäure umsetzt.

17. Verfahren gemäss Anspruch 16, dadurch gekennzeichnet, dass man eine Anthrachinonverbindung der in Anspruch 16 angegebenen Formel worin $R_1$ Wasserstoff, Cycloalkyl mit bis zu 9 C-Atomen oder ein $C_{1-5}$-Alkylrest, vorzugsweise Isopropyl oder Isobutyl ist, Ar einen gegebenenfalls mit Methyl substituierten Phenylenrest bedeutet, mit $\alpha,\beta$-Dibrompropionamidoglykolsäure umsetzt.

18. Verfahren gemäss Ansprüchen 12 bis 15, dadurch gekennzeichnet, dass man eine Verbindung der Formel

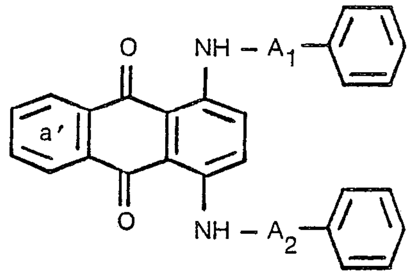

(7)

worin $A_1$ und $A_2$ je einen gegebenenfalls verzweigten Alkylenrest mit bis 5 Kohlenstoffatomen bedeutet und der Ring a' gegebenenfalls mit Hydroxyl oder Halogen substituiert ist, mit 2 Aequivalenten $\alpha,\beta$-Dichlor- oder $\alpha,\beta$-Dibrompropionamidoglykolsäure, $\alpha$-Chlor- oder $\alpha$-Bromacrylamidoglykolsäure oder Chloracetamidoglykolsäure umsetzt und anschliessend sulfiert.

19. Verfahren gemäss den Ansprüchen 12 bis 15, dadurch gekennzeichnet, dass man einen Farbstoff der Formel

$$[D—N{=}N—K]—(-H)_m \qquad (10)$$

worin D der Rest einer Diazokomponente der Benzol- oder Naphthalinreihe und K der Rest einer Kupplungskomonente bedeutet und m 1 oder 2 ist, mit m Aequivalenten $\alpha,\beta$-Dichlor- oder $\alpha,\beta$-Dibrompropionamidoglykolsäure, $\alpha$-Chlor- oder $\alpha$-Bromacrylamidoglykolsäure oder Chloracetamidoglykolsäure umsetzt.

20. Verfahren gemäss Anspruch 19, dadurch gekennzeichnet, dass man von einem Farbstoff ausgeht, worin K den Rest einer Naphtholsulfonsäure, eines Naphtho-(1,2-d)-imidazols, eines Acetoacetarylids oder eines 5-Aminopyrazols oder Pyrazol-5-ons ist.

21. Verfahren gemäss Anspruch 18 oder 20, dadurch gekennzeichnet, dass man mit Dibrompropionamidoglykolsäure umsetzt.

22. Verfahren gemäss Anspruch 16, dadurch gekennzeichnet, dass man 1-Amino-4-mesidinoanthrachinon-2-sulfonsäure mit Dibrompropionamidoglykolsäure zum dem Farbstoff der Formel

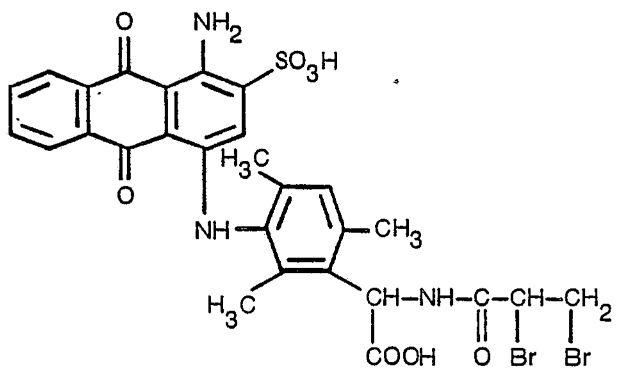

umsetzt.

23. Verfahren zum Färben und Bedrucken unter Verwendung der Farbstoffe gemäss den Ansprüchen 1 bis 11.

24. Verfahren gemäss Anspruch 23 zum Färben und Bedrucken von natürlichen oder synthetischen Polyamidmaterialien oder Cellulosematerialien.

25. Verbindung der Formel

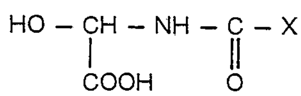

worin X ein Rest der Formel —CHCl—$CH_2Cl$, —CHBr—$CH_2Br$, —CCl=$CH_2$ oder —CBr=$CH_2$ ist.

## Revendications

1. Colorants de formule

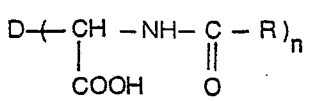 (1)

où D est un radical de colorant organique contenant au moins un groupe solubilisant dans l'eau, R est un radical halogénalkyle à 1 à 2 atomes de carbone ou un radical halogénacryle, et n est un nombre entier de 1 à 4, chaque groupe de formule

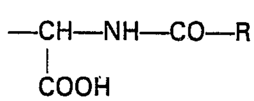

étant fixé à D par l'intermédiaire d'un atome de carbone aromatique.

2. Colorants selon la revendication 1, où D est un radical d'un colorant de la série anthraquinonique, azoïque, de dioxazine ou de phtalocyanine, contenant 1 à 3, de préférence 1 à 2 groupes sulfo.

3. Colorants selon la revendication 1, où R est un radical de formule $—CH_2Cl$, $—CH_2Br$, $—CCl{=}CH_2$, $—CBr{=}CH_2$, $—CHCl—CH_2Cl$ ou $—CHBr—CH_2Br$.

4. Colorants selon les revendications 1 à 3, où D est un radical de la série anthraquinonique ou de la série azoïque contenant 1 à 2 groupes sulfo, et n vaut 1 ou 2.

5. Colorants selon les revendications 1 à 4, de formule

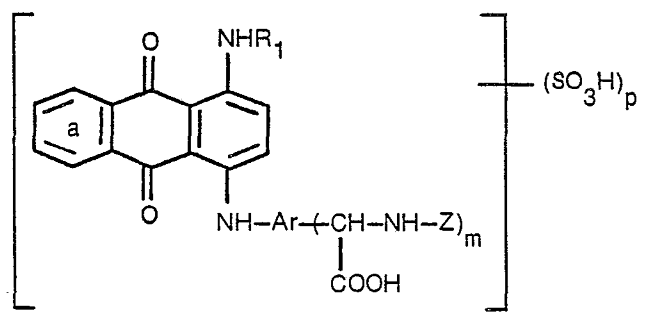

(3)

où $R_1$ est l'hydrogène, un radical alkyle à 1 à 5 atomes de carbone, aralkyle, cycloalkyle ayant jusqu'à 9 atomes de carbone ou aryle, Ar est un radical arylène, Z est un radical $\alpha,\beta$-dichloro- ou -dibromopropionyle, un radical $\alpha$-chloro- ou $\alpha$-bromacryloyle ou un radical chloracétyle, m vaut 1 ou 2 et p vaut 1 ou 2, et où le noyau a est éventuellement substitué par un radical hydroxyle ou un halogène.

6. Colorants selon la revendication 5, où $R_1$ est l'hydrogène, un radical cycloalkyle ayant jusqu'à 9 atomes de carbone ou un radical alkyle à 1 à 5 atomes de carbone, de préférence le radical isopropyle ou isobutyle, Ar est un radical phénylène éventuellement substitué par un groupe méthyle, et Z est le groupe dibromopropionyle.

7. Colorants selon les revendications 1 à 4, de formule

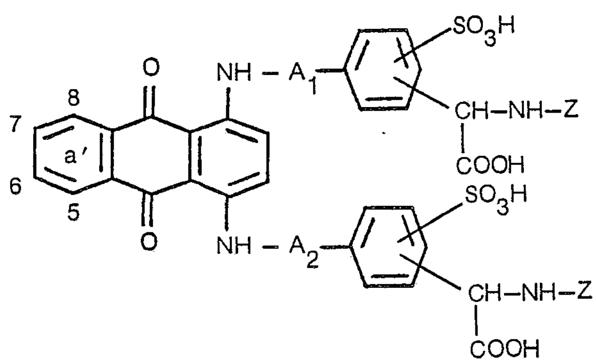

(4)

où $A_1$ et $A_2$ sont chacun un radical alkylène ramifié ayant jusqu'à 5 atomes de carbone et Z est un radical $\alpha,\beta$-dichloro- ou -dibromopropionyl-, un radical $\alpha$-chloro- ou $\alpha$-bromacryloyl-, ou un radical chloracétyle, et où le noyau a' est éventuellement substitué par un groupe hydroxyle ou un halogène.

8. Colorants selon les revendications 1 à 4, de formule

$$[D—N{=}N—K]\!—\!(\underset{\substack{|\\ COOH}}{CH}—NH—Z)_m \qquad (5)$$

où D est le résidu d'un composant de diazotation de la série du benzène ou du naphtalène et K le résidu d'un composant de copulation, Z étant le même que dans la revendication 5, et m vaut 1 ou 2.

9. Colorants selon la revendication 8, où K est le résidu d'un acide naphtolsulfonique, d'un naphto-(1,2-d)-imidazole, d'un acétylacétarylide ou d'un 5-aminopyrazole ou de la pyrazol-5-one.

10. Colorants selon la revendication 7 ou 9, où Z est le groupe dibromopropionyle.

11. Colorant selon la revendication 5, de formule

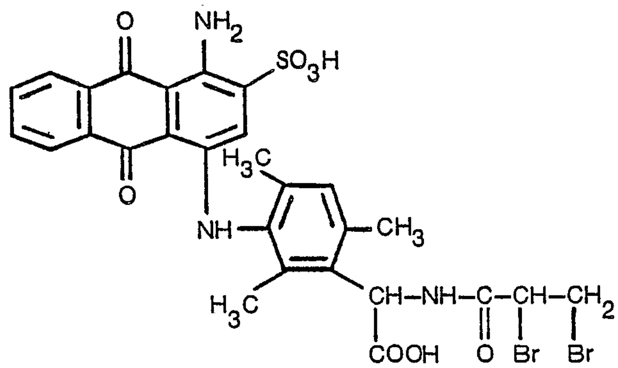

12. Procédé pour la préparation de colorants de formule

$$D\!-\!\!\left(\underset{\displaystyle COOH}{\underset{|}{CH}} - NH - \underset{\displaystyle O}{\underset{\|}{C}} - R\right)_n \qquad (1)$$

où D est un radical colorant organique contenant au moins un groupe solubilisant dans l'eau, R est un radical halogénalkyle à 1 à 2 atomes de carbone ou un radical halogénacryle, et n est un nombre entier de 1 à 4, et où chaque groupe de formule

$$-\underset{\displaystyle COOH}{\underset{|}{CH}}-NH-CO-R$$

est fixé à D par l'intermédiaire d'un atome de carbone aromatique, caractérisé en ce qu'on fait réagir un colorant organique $D\!-\!(H)_n$ sur un acide halogénalcanoylamidoglycolique ou un acide halogénacryloylamidoglycolique.

13. Procédé selon la revendication 12, caractérisé en ce que l'on part d'un colorant de la série anthraquinonique, azoïque, de dioxazine ou de phtalocyanine, contenant 1 à 3, de préférence 1 à 2 groupes sulfo.

14. Procédé selon la revendication 12, caractérisé en ce que l'on part d'un acide halogénalcanoyl-, ou halogénacryloylamidoglycolique de formule

$$HO-\underset{\displaystyle COOH}{\underset{|}{CH}}-NH-CO-R \qquad (8)$$

où R est un radical de formule $-CH_2Cl$, $-CH_2Br$, $-CCl{=}CH_2$, $-CBr{=}CH_2$, $-CHCl-CH_2Cl$ ou $-CHBr-CH_2Br$.

15. Procédé selon les revendications 12 à 14, caractérisé en ce que l'on part d'un colorant de formule

$$D\!-\!(H)_n \qquad (6)$$

où D est un résidu de la série anthraquinonique ou de la série azoïque, contenant 1 à 2 groupes sulfo, et n vaut 1 ou 2.

16. Procédé selon les revendications 12 à 15, caractérisé en ce que l'on fait réagir un colorant de formule

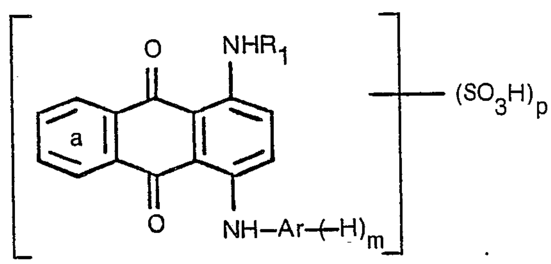

(9)

où $R_1$ est l'hydrogène, un radical alkyle à 1 à 5 atomes de carbone, aralkyle, cycloalkyle ayant jusqu'à 9 atomes de carbone ou aryle, Ar est un radical arylène, m vaut 1 ou 2 et p vaut 1 ou 2, et où le noyau a est éventuellement substitué par un radical hydroxyle ou un halogène, sur m équivalents d'acide $\alpha,\beta$-dichloro- ou $\alpha,\beta$-dibromopropionamidoglycolique, $\alpha$-chloro- ou $\alpha$-bromacrylamidoglycolique, ou d'acide chloracétamidoglycolique.

17. Procédé selon la revendication 16, caractérisé en ce que l'on fait réagir un composé anthraquinonique ayant la formule indiquée dans la revendication 16, où $R_1$ est l'hydrogène, un radical cycloalkyle ayant jusqu'à 9 atomes de carbone ou un groupe alkyle à 1 à 5 atomes de carbone, de préférence isopropyle ou isobutyle, Ar est un radical phényle éventuellement substitué par un groupe méthyle, sur de l'acide $\alpha,\beta$-dibromopropionamidoglycolique.

18. Procédé selon les revendications 12 à 15, caractérisé en ce que l'on fait réagir sur deux équivalents d'acide $\alpha,\beta$-dichloro- ou $\alpha,\beta$-dibromopropionamidoglycolique, d'acide $\alpha$-chloro- ou $\alpha$-bromacrylamidoglycolique, ou d'acide chloracétamidoglycolique, un colorant de formule

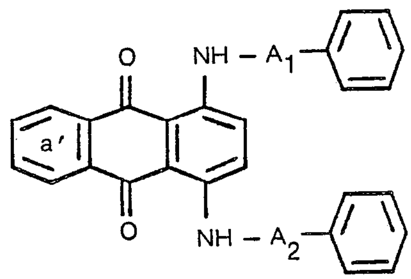

(7)

où $A_1$ et $A_2$ sont chacun un radical alkylène à 1 à 5 atomes de carbone, éventuellement ramifié, et le noyau a'' est éventuellement substitué par un radical hydroxyle ou un halogène et qu'ensuite, on sulfonne.

19. Procédé selon les revendications 12 à 15, caractérisé en ce que l'on fait réagir sur m équivalents d'acide $\alpha,\beta$-dibromopropionamidoglycolique, d'acide $\alpha$-chloro- ou $\alpha$-bromacrylamidoglycolique, ou d'acide chloracétamidoglycolique, un colorant de formule

$$D—N=N—K-(-H)_m \qquad (10)$$

où D est le résidu d'un composant de diazotation de la série du benzène ou du naphtalène et K est le résidu d'un composant de copulation, m vaut 1 ou 2.

20. Procédé selon la revendication 19, caractérisé en ce que l'on part d'un colorant dans lequel K est le résidu d'un acide naphtolsulfonique, d'un naphto-(1,2-d)-imidazole, d'un acétylacétarylide ou d'un 5-aminopyrazole ou de pyrazolone-5.

21. Procédé selon la revendication 18 ou 20, caractérisé en ce qu'on fait réagir sur de l'acide dibromopropionamidoglycolique.

22. Procédé selon la revendication 16, caractérisé en ce qu'on fait réagir de l'acide 1-amino-4-mésidino-anthraquinone-2-sulfonique sur de l'acide dibromopropionamidoglycolique pour donner le colorant de formule

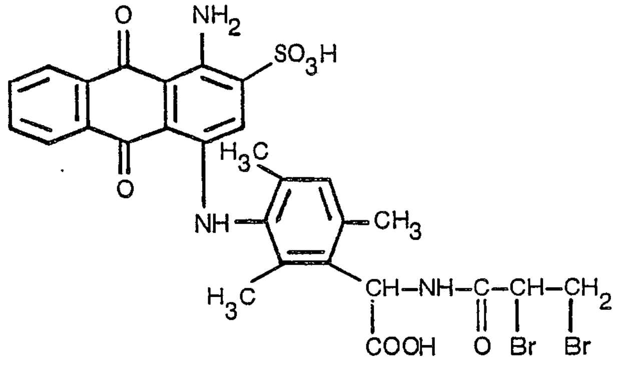

23. Procédé de teinture et d'impression par l'utilisation des colorants selon les revendications 1 à 11.

24. Procédé selon la revendication 23 pour la teinture et l'impression de matières de polyamide ou de matières de cellulose naturelles ou synthétiques.

25. Composés de formule

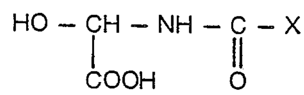

où X est un radical de formule —CHCl—$CH_2Cl$, —CHBr—$CH_2Br$, —CCl=$CH_2$ ou —CBr=$CH_2$.

**Claims**

1. A dye of the formula

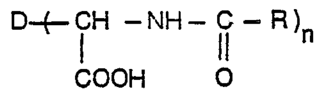

(1)

wherein D is an organic dye radical containing at least one water-solubilizing group, R is a haloalkyl radical containing 1 or 2 carbon atoms or is a haloacryl radical, n is an integer from 1 to 4 and each group of the formula

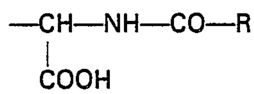

is attached to D through an aromatic carbon atom.

2. A dye according to claim 1, wherein D is a dye radical of the anthraquinone, azo, dioxazine or phthalocyanine series containing 1 to 3, preferably 1 to 2, sulfo groups.

3. A dye according to claim 1, wherein R is a radical of the formula —$CH_2Cl$, —$CH_2Br$, —CCl=$CH_2$, —CBr=$CH_2$, —CHCl—$CH_2Cl$ or —CHBr—$CH_2Br$.

4. A dye according to any one of claims 1 to 3, wherein D is a radical of the anthraquinone or azo series containing 1 or 2 sulfo groups and n is 1 or 2.

5. A dye according to any one of claims 1 to 4 of the formula

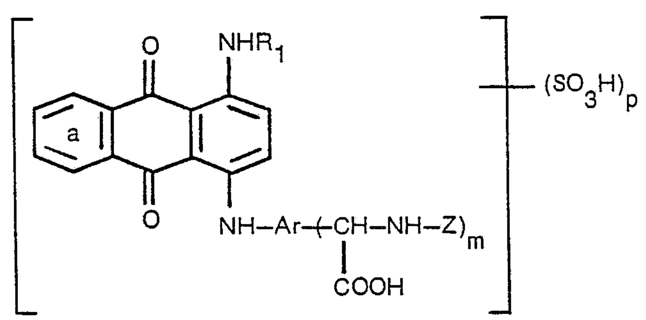

(3)

wherein $R_1$ is hydrogen, $C_{1-5}$alkyl, aralkyl, cycloalkyl containing not more than 9 carbon atoms or aryl, Ar is an arylene radical, Z is an $\alpha,\beta$-dichloropropionyl radical, an $\alpha,\beta$-dibromopropionyl radical, an $\alpha$-chloroacryloyl radical, an $\alpha$-bromoacryloyl radical or is a chloroacetyl radical, m is 1 or 2, p is 1 or 2 and ring a is unsubstituted or substituted by hydroxy or halogen.

6. A dye according to claim 5, wherein $R_1$ is hydrogen, cycloalkyl containing not more than 9 carbon atoms or is a $C_{1-5}$alkyl radical, preferably isopropyl or isobutyl, Ar is a phenylene radical or a phenylene radical substituted by methyl and Z is the dibromopropionyl group.

7. A dye according to any one of claims 1 to 4 of the formula

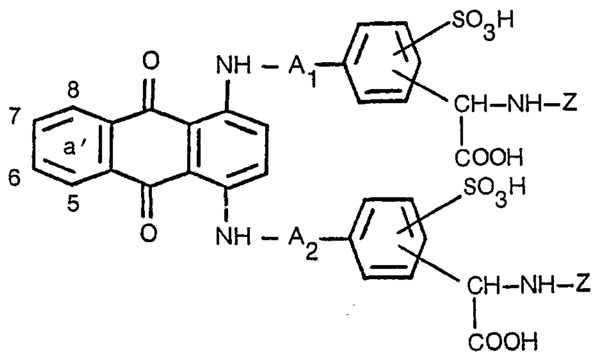

(4)

wherein each of $A_1$ and $A_2$ is a linear or branched alkylene radical containing not more than 5 carbon atoms, Z is an $\alpha,\beta$-dichloropropionyl radical, an $\alpha,\beta$-dibromopropionyl radical, an $\alpha$-chloroacryloyl radical, an $\alpha$-bromoacryloyl radical or a chloroacetyl radical and ring a' is unsubstituted or substituted by hydroxy or halogen.

8. A dye according to any one of claims 1 to 4 of the formula

$$[D-N=N-K]-\left(\underset{\substack{|\\ COOH}}{CH}-NH-Z\right)_m \qquad (5)$$

wherein D is the radical of a diazo component of the benzene or naphthaline series, K is the radical of a coupling component, Z has the same meaning as in claim 5 and m is 1 or 2.

9. A dye according to claim 8, wherein K is the radical or a naphtholsulfonic acid, a naphtho-(1,2-d)-imidazole, an acetoacetarylide or of a 5-aminopyrazole or pyrazol-5-one.

10. A dye according to either claim 7 or claim 9, wherein Z is the dibromopropionyl group.

11. A dye according to claim 5 of the formula

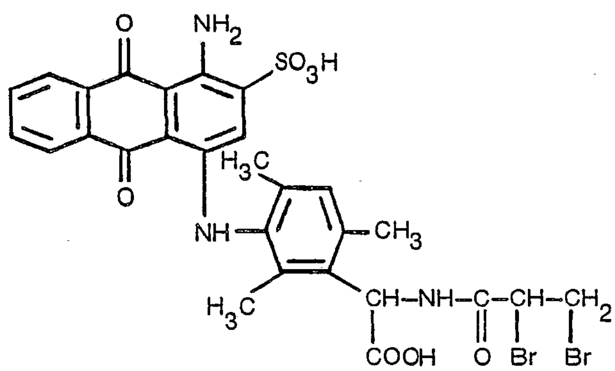

12. A process for the preparation of a dye of the formula

$$D-\left(\underset{\substack{|\\ COOH}}{CH}-NH-\underset{\substack{\|\\ O}}{C}-R\right)_n \qquad (1)$$

wherein D is an organic dye radical containing at least one water-solubilizing group, R is a haloalkyl radical containing 1 or 2 carbon atoms or is a haloacryl radical, n is an integer from 1 to 4 and each group of the formula

$$-\underset{\substack{|\\ COOH}}{CH}-NH-CO-R$$

is attached to D through an aromatic carbon atom, which process comprises reacting an organic dye $D-(H)_n$ with a haloalkanoylamidoglycolic acid or a haloacryloylamidoglycolic acid.

13. A process according to claim 12, wherein the starting material is a dye of the anthraquinone, azo, dioxazine or phthalocyanine series containing 1 to 3, preferably 1 to 2, sulfo groups.

14. A process according to claim 12, wherein the starting material is a haloalkanoylamidoglycolic acid or a haloacryloylamidoglycolic acid of the formula

$$\underset{\displaystyle COOH}{HO—\underset{|}{CH}—NH—CO—R} \qquad (8)$$

wherein R is a radical of the formula $—CH_2Cl$, $—CH_2Br$, $—CCl{=}CH_2$, $—CBr{=}CH_2$, $—CHCl—CH_2Cl$ or $—CHBr—CH_2Br$.

15. A process according to any one of claims 12 to 14, wherein the starting material is a dye of the formula

$$D\!-\!\!(\!-H)_n \qquad (6)$$

wherein D is a radical of the anthraquinone or azo series containing 1 to 2 sulfo groups and n is 1 or 2.

16. A process according to any one of claims 12 to 15, which process comprises reacting a dye of the formula

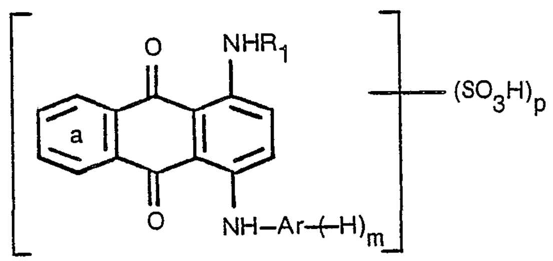

(9)

wherein $R_1$ is hydrogen, $C_{1-5}$alkyl, aralkyl, cycloalkyl containing not more than 9 carbon atoms or aryl, Ar is an arylene radical, m is 1 or 2, p is 1 or 2 and ring a is unsubstituted or substituted by hydroxy or halogen, with m equivalents of $\alpha,\beta$-dichloropropionamidoglycolic acid, $\alpha,\beta$-dibromopropionamidoglycolic acid, $\alpha$-chloroacrylamidoglycolic acid, $\alpha$-bromoacrylamidoglycolic acid or chloroacetamidoglycolic acid.

17. A process according to claim 16, which process comprises reacting an anthraquinone compound of the formula as indicated in claim 16, wherein $R_1$ is hydrogen, cycloalkyl containing not more than 9 carbon atoms or a $C_{1-5}$alkyl radical, preferably isopropyl or isobutyl, Ar is a phenylene radical or a phenylene radical substituted by methyl, with $\alpha,\beta$-dibromopropionamidoglycolic acid.

18. A process according to any one of claims 12 to 15, which process comprises reacting a compound of the formula

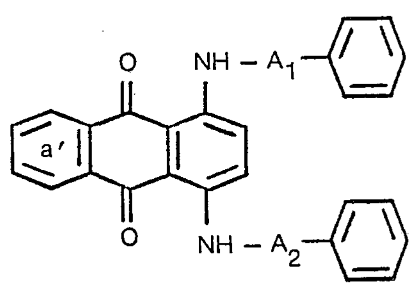

(7)

wherein each of $A_1$ and $A_2$ is a linear or branched alkylene radical containing not more than 5 carbon atoms and ring a' is unsubstituted or substituted by hydroxy or halogen, with 2 equivalents of $\alpha,\beta$-dichloropropionamidoglycolic acid, $\alpha,\beta$-dibromopropionamidoglycolic acid, $\alpha$-chloroacrylamidoglycolic acid, $\alpha$-bromoacrylamidoglycolic acid or chloroacetamidoglycolic acid, and subsequently sulfurating the compound so obtained.

19. A process according to any one of claims 12 to 15, which process comprises reacting a dye of the formula

$$[D—N{=}N—K]\!-\!\!(\!-H)_m \qquad (10)$$

wherein D is a radical of a diazo component of the benzene or naphthaline series, K is the radical of a coupling component and m is 1 or 2, with m equivalents of $\alpha,\beta$-dichloropropionamidoglycolic acid, $\alpha,\beta$-dibromopropionamidoglycolic acid, $\alpha$-chloroacrylamidoglycolic acid, $\alpha$-bromoacrylamidoglycolic acid or chloroacetamidoglycolic acid.

20. A process according to claim 19, wherein the starting material is a dye, wherein K is the radical of naphtholsulfonic acid, a naphtho-(1,2-d)-imidazole, an acetoacetarylide or of a 5-aminopyrazole or parazol-5-one.

21. A process according to either claim 18 or claim 20, wherein dibromopropionamidoglycolic acid is employed as a reactant.

22. A process according to claim 16, which process comprises reacting a 1-amino-4-mesidino-anthraquinone-2-sulfonic acid with dibromopropionamidoglycolic acid to form a dye of the formula

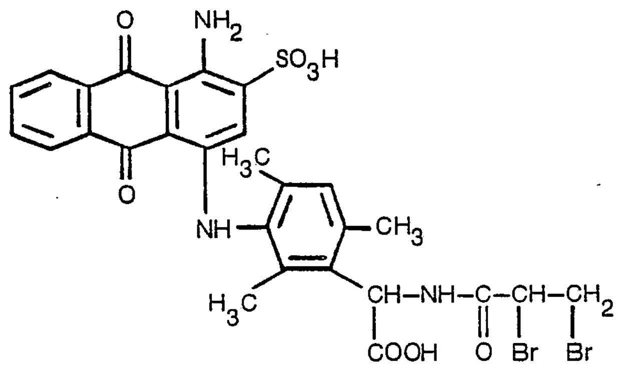

23. A process for dyeing or printing which comprises the use of a dye as claimed in any one of claims 1 to 11.

24. A process according to claim 23 for dyeing or printing natural or synthetic polyamide material or cellulosic material.

25. A compound of the formula

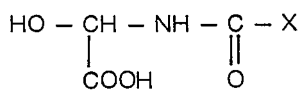

wherein X is a radical of the formula —CHCl—$CH_2Cl$, —CHBr—$CH_2Br$, —CCl=$CH_2$ or —CBr=$CH_2$.